# EUROPEAN PATENT APPLICATION

(11) **EP 1 477 914 A2**
(43) Date of publication of application: **17.11.2004**
(21) Application number: 04252723.4
(22) Date of filing: 11.05.2004
(51) Int. Cl.: G06F 17/30

(54) **Information processing apparatus, method, and program and recording medium**

(30) Priority: 13.05.2003 JP 2003134564; 13.05.2003 JP 2003134565; 27.04.2004 JP 2004131341; 27.04.2004 JP 2004131342
(71) Applicant: Ricoh Company, Ltd., Tokyo 143-8555 (JP)
(72) Inventor: Ohtani, Yohko, Ohta-ku Tokyo (JP)
(74) Representative: Leeming, John Gerard

(57) **Abstract**

An information processing apparatus is provided. The information processing apparatus includes an information management part for managing first user information obtained from an information management server that manages second user information, wherein the information management part manages the first user information as an item value of a management item in the information processing apparatus by linking the first user information with the second user information that is managed by an item value of a management item in the information management server, and the information management part updates the first user information by using a link used for linking the first user information with the second user information in response to an update start operation.

## Description

### BACKGROUND OF THE INVENTION

### 1. Field of the Invention

The present invention relates to an information processing apparatus having information processing functions as main functions or as secondary functions, and relates to an information processing method, an information processing program and a recording medium. Examples of the information processing apparatus are information apparatuses such as a personal computer and a work station that include information processing functions as main functions, and are electrical apparatuses such as a copier, a printer, a scanner, a facsimile, a compound machine that include information processing functions as secondary functions.

### 2. Description of the Related Art

Recently, various electronic apparatuses include information processing functions. As examples of the electronic apparatuses, there exists a cellular phone that manages information such as mail addresses and telephone numbers input by the user, a satellite receiving tuner that manages information such as channel settings input by the user, and a microwave oven that manages information such as a recipe obtained via the Internet. For realizing such information processing functions, the electronic apparatus includes a CPU, a ROM, a RAM, a HDD, a MODEM, a NIC and the like. That is, the electronic apparatuses are becoming information processing apparatuses.

Examples of the information processing apparatuses include a personal computer, a work station and the like. Examples of electronic apparatuses that are becoming information processing apparatuses include a copier, a printer, a scanner, a facsimile, a compound machine and the like, in which the compound machine is an apparatus that realizes functions of a copier, a printer, a scanner and a facsimile.

There is a function that needs "user information" in functions of the information processing apparatuses and in the electronic apparatuses. For example, for realizing functions of mail and telephone in a cellular phone, the cellular phone needs "user information" such as a mail address and a facsimile telephone number. Although many information processing apparatuses and electronic apparatuses include functions for managing the user information, it is desirable that these apparatuses include a function to obtain the user information from an information management server. A LDAP (Lightweight Directory Access Protocol) server that is used for managing employee information, customer information, resident information and the like is an example of the information management server.

In the LDAP server, "human", "organization" and the like are recognized as "objects". Information on each object is stored in an entry. In the entry, "object class" that is information on the type of the object and "attribute" that is information on the property of the object are stored. The attribute includes "attribute type" and "attribute value". The attribute type includes c(country), o(organization), ou(organization unit), cn(full name), sn(family name), givenName(given name), mail(mail address), telephoneNumber(telephone number), facsimileTelephoneNumber(facsimile telephone number) and the like. The attribute value includes c:Japan, o:Ricoh, ou:research and development section, cn:Taro Suzuki, sn:Suzuki, givenName:Taro and the like. Since each entry is layered by object classes, identification names (DN) of each entry are formed by arranging relative identification names (RDN) of each entry derived from an attribute (identification attribute) of each entry in an order of the layers.

Various requests and responses are sent and received between a LDAP client and a LDAP server. LDAP is provided with operations of authentication such as "bind", "unbind" and the like, operations of inquiry such as "search" and "compare", and operations of update such as "add", "delete" and "modify". For example, when a search operation is requested from the LDAP client to the LDAP sever, the LDAP server sends a search result to the LDAP client.

In the case where the information processing apparatus or electronic apparatus obtains the user information from the LDAP server and manages the user information, after the apparatus obtains the user information from the LDAP server, there is a case in that the user information managed by the LDAP server may be changed. For example, a mail address, a telephone number, or a facsimile number may be changed according to a personnel change or a change of address. In such a case, it is desirable to reflect the change of the user information managed by the LDAP server to the user information managed by the information processing apparatus or the electronic apparatus.

### SUMMARY OF THE INVENTION

An object of the present invention to provide technology for reflecting changes of user information managed by an information management server to user information managed by an information processing apparatus that obtains user information from the information management server such as the LDAP server and manages the user information.

The above object is achieved by an information processing apparatus including:
an information management part for managing first user information obtained from an information management server that manages second user information,
wherein the information management part manages the first user information as an item value of a management item in the information processing apparatus by linking the first user information with the second user information that is managed by an item value of a management item in the information management server, and
the information management part updates the first user information by using a link used for linking the first user information with the second user information in response to an update start operation. Instead of using the update start operation, the information management part may automatically start updating the first user information by using the link used for linking the first user information with the second user information at predetermined timing.

According to the present invention, changes of user information managed by the information management server can be reflected to user information managed by the information processing apparatus.

The above object is also achieved by information processing apparatus including:
an information management part for managing first user information obtained from an information management server that manages second user information and managing third user information that is not obtained from the information management server,
wherein the first user information and the third user information are included in the same entry in the information processing apparatus,
wherein the information management part manages the first user information as an item value of a management item in the information processing apparatus by linking the first user information with the second user information that is managed by an item value of a management item in the information management server, and
the information management part updates the first user information by using a link used for linking the first user information with the second user information in response to an update start operation.

In addition, the above object is also achieved by information processing apparatus including:
an information management part for managing first user information obtained from an information management server that manages second user information,
a link operation part for linking the first user information managed by the information management part as an item value of a management item in the information processing apparatus with the second user information that is managed by an item value of a management item in the information management server, and
an update start operation part for performing an update start operation for starting update of the first user information.

### BRIEF DESCRIPTION OF THE DRAWINGS

Other objects, features and advantages of the present invention will become more apparent from the following detailed description when read in conjunction with the accompanying drawings, in which:
Fig.1 shows an information processing apparatus 11 as an example of an embodiment of the present invention;
Fig.2 shows a compound machine 101 that is an example of the embodiment of the present invention;
Fig.3 shows hardware 111 of the compound machine 101 shown in Fig.2;
Fig.4 is an external view of the compound machine 101 of Fig.2;
Fig.5 shows an operation panel of the compound machine 101;
Fig.6 shows an address table of user information managed by the compound machine;
Fig.7 shows a tree structure of user information managed by the compound machine;
Fig.8 shows a system for explaining requests and responses between the compound machine and the LDAP server;
Fig.9 is a flowchart of processes between the compound machine and the LDAP server;
Fig.10 shows an initial setting screan, a system initial setting screen and a LDAP server registration/change screen;
Fig.11 shows screen changes relating to processes between the compound machine and the LDAP server;
Fig.12 indicates a search result obtained from the LDAP server;
Fig.13 shows screen change that follows Fig.10;
Fig.14 shows an address table of user information managed by the compound machine;
Fig.15 shows a tree structure of user information managed by the compound machine;
Fig.16 shows a user identifying information setting screen and an attribute selection screen;
Fig.17 shows an address table registration/change screen and an attribute selection screen;
Fig.18 is a flowchart showing update process of storing information;
Fig.19 shows screen change before updating;
Fig.20 shows screen changes after updating;
Fig.21 shows a tree structure of user information managed by the compound machine;
Fig.22 shows a tree structure of user information managed by the compound machine;
Fig.23 shows screen changes when update information add setting for adding the update information of the storing information to the sever information is registered;
Fig.24 shows screen changes when a LDAP server is selected as an update target;
Fig.25 shows screen changes when a management item is selected as an update target;
Fig.26 shows screen changes when a LDAP sever and a management item are selected as update targets;
Fig.27 shows screen changes when a user is selected as an update target;
Fig.28 shows screen changes when a user and a management item are selected as update targets;
Fig.29 shows XML data used as an update start request of storing information;
Fig.30 shows a flowchart showing remote update of the storing information;
Fig.31 shows a flowchart of the update process of storing information in step 102 in Fig.18;
Fig.32 is a flowchart of the generation of the entry;
Fig.33 is a flowchart of the editing of the entry;
Fig.34 is a flowchart of deletion of the entry;
Fig.35 shows screen changes relating to automatic update setting for storing information;
Fig.36 is a flowchart showing automatic update of storing information;
Fig.37 shows screen changes showing a case where the update target is all storing information;
Fig.38 shows screen changes when a LDAP server is selected as an update target;
Fig.39 shows screen change when a management item is selected as an update target;
Fig.40 shows screen changes when a LDAP sever and a management item are selected as update targets;
Fig.41 shows screen changes when a user is selected as an update target;
Fig.42 shows screen changes when a user and a management item are selected as update targets;
Fig.43 shows XML data used as an automatic update setting request of storing information;
Fig.44 shows a flowchart showing remote automatic update setting for storing information;
Fig.45 shows a flowchart of the update process of storing information in step 304 in Fig.36;
Fig.46 is a flowchart showing the case where the determination is performed by using the LDAP search;
Fig.47 is a flowchart showing a case where determination is performed by using LDAP comparison;
Fig.48 shows screen change for automatic update of storing information;
Fig.49 shows screen changes that follow the screen changes of Fig.48;
Fig.50 shows screen change that follow the screen changes of Fig.48;
Fig.51 shows a flowchart showing the automatic update process for the storing information.

### DETAILED DESCRIPTION OF THE PREFERRED EMBODIMENTS

In the following, embodiments of the present invention are described.

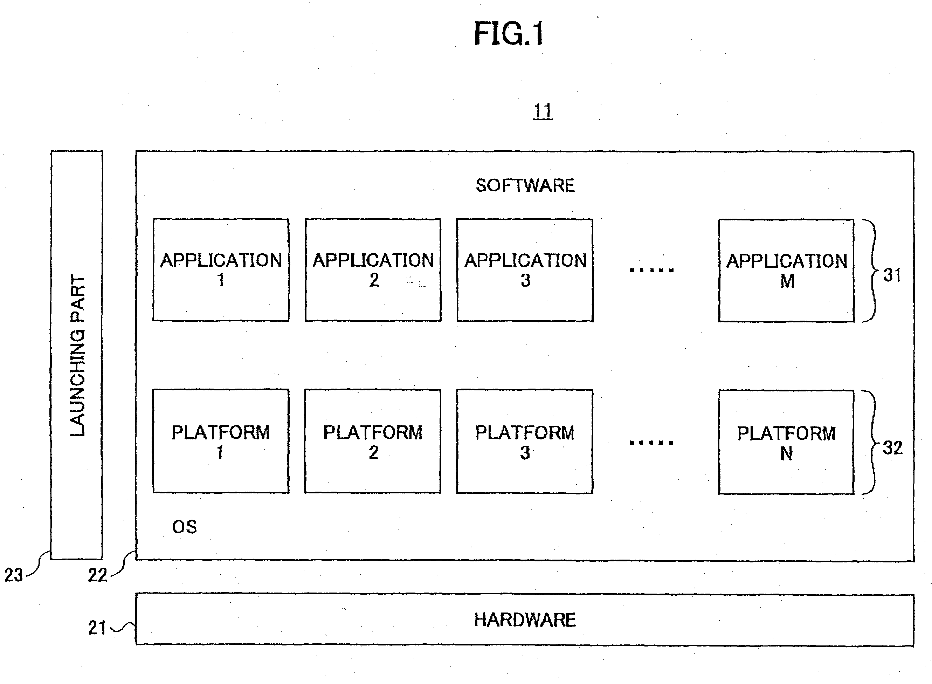

Fig.1 shows an information processing apparatus 11 as an example of an embodiment of the present invention. The information processing apparatus 11 shown in Fig.1 includes hardware 21 and software 22 and a launching part 23.

The hardware 21 includes an information processing part including a CPU, a ROM, a RAM, a HDD and the like, a communication part including a MODEM and a NIC and the like, an operation part including a key board and a mouse and the like, and a display part including a display and the like.

The software 22 includes various applications 31 and platforms 32. The platforms 32 include a module for controlling the information processing part, a module for performing mediation for the communication part, a module for controlling the operation part and the display part, a module for managing the user information, a module for controlling management of the user information, a module for controlling management of the system and the like. Theses modules are executed in parallel as processes by an operating system (OS) such as the UNIX.

The launching part 23 is executed initially when the information processing apparatus 11 is powered on. Accordingly, the OS is launched and the applications 31 and the platforms 32 are executed.

Examples of the information processing apparatus 11 include an image forming apparatus such as a copier, a printer, a scanner, a facsimile and a compound machine. In the following, the compound machine 101 is taken as an example of the information processing apparatus 11.

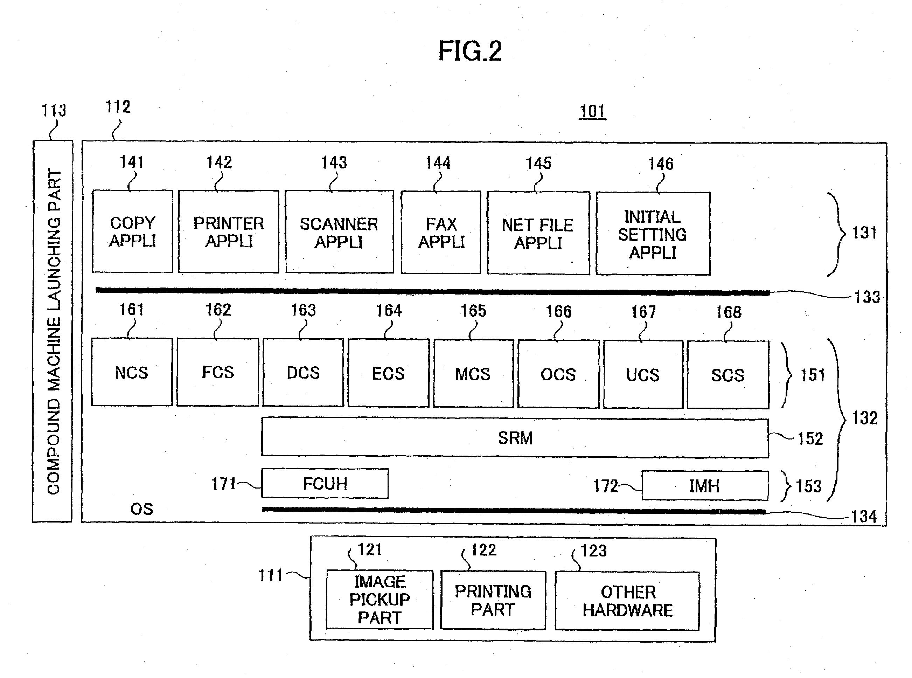

Fig.2 shows the compound machine 101 that is an example of the embodiment of the present invention. The compound machine 101 of Fig.2 includes various hardware 111, various software 112 and a compound machine launching part 113.

The hardware 111 includes an image pickup part 121, a printing part 122, and other hardware 123. The image pickup part 121 is hardware for obtaining an image (image data) from a document. The printing part 122 is hardware for printing the image (image data) on a printing paper and the like.

The software 112 includes various applications 131 and various platforms 132. These are executed in parallel as processes by the OS.

The applications 131 include a copy application 141 for copying, a printer application 142 for printing, a scanner application 143 for scanning, a facsimile application 144 for facsimile, a network file application 145 for network file and an initial setting application 146 for initial setting.

The platforms 132 include various control services 151, a system resource manager 152 and various handlers 153. The control services 151 include a network control service (NCS) 161, a facsimile control service (FCS) 162, a delivery control service (DCS) 163, an engine control service (ECS) 164, a memory control service (MCS) 165, an operation panel control service (OCS) 166, a user directory control service (UCS) 167 and a system control service (SCS) 168. The handlers 153 include a facsimile control handler (FCUH) 171 and an image memory handler (IMH) 172.

A process of the NCS 161 performs mediation for network communications. A process of the FCS 162 provides APIs for sending and receiving facsimile. A process of the DCS 163 performs control on delivery processes of stored documents. A process of the ECS 164 controls the image pickup part 121 and the printing part 122. A process of the MCS 165 controls the memory and the hard disk drive and the like, A process of the OCS 166 controls the operation panel. A process of the UCS 167 manages user information. A process of the SCS 168 controls the system.

The compound machine launching part 113 is initially launched when the compound machine 101 is powered on. Accordingly, the OS is launched, and the applications 131 and the platforms 132 are executed. These programs are stored in the hard disk drive, and are read from the hard disk drive to the memory so as to be executed.

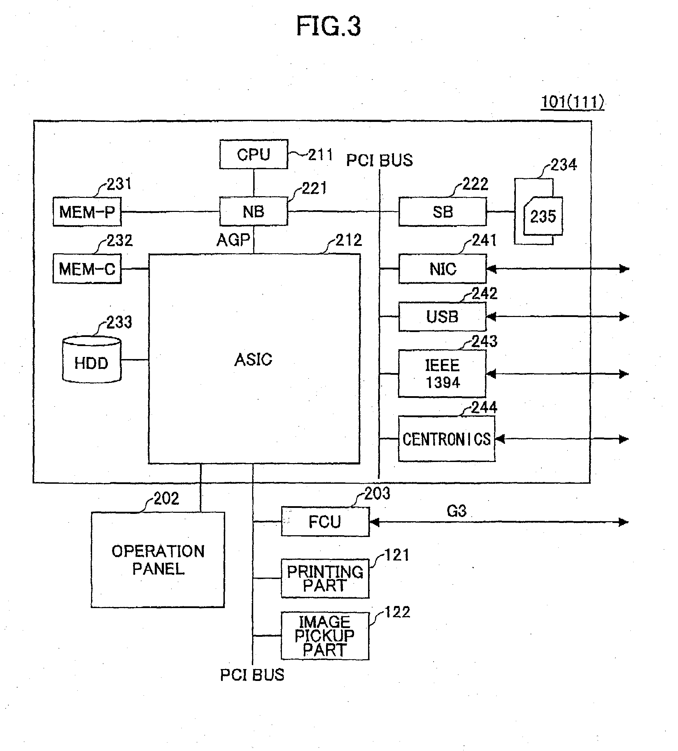

Fig.3 shows hardware 111 of the compound machine 101 shown in Fig.2. The hardware 111 includes a controller 201, an operation panel 202, a facsimile control unit 203, an image pickup part 121 and a printing part 122.

The controller 201 includes a CPU 211, an ASIC 212, a NB 221, a SB 222, a MEM-P 231, a MEM-C 232, a HDD (hard disk drive) 233, a memory card slot 234, a NIC (network interface controller) 241, a USB device 242, an IEEE 1394 device 243, and a Centronics device 244.

The CPU 211 is an IC for various information processing. The ASIC 212 is an IC for various image processing. The NB 221 is a north bridge of the controller 201. The SB 222 is a south bridge of the controller 201. The MEM-P 231 is a system memory of the compound machine 101. The MEM-C 232 is a local memory of the compound machine 101. The HDD 233 is a storage of the compound machine 101. The memory card slot 234 is a slot in which the memory card 235 is set. The NIC 241 is a controller for network communications by using MAC addresses. The USB device 242 is a device for providing a connection terminal of the USB standard. The Centronics device 244 is a device for providing a connection terminal of the Centronics.

The operation panel 202 is hardware (operation part) for an operator to input data in the compound machine 101, and is hardware (display part) for the compound machine 101 to output data to the operator.

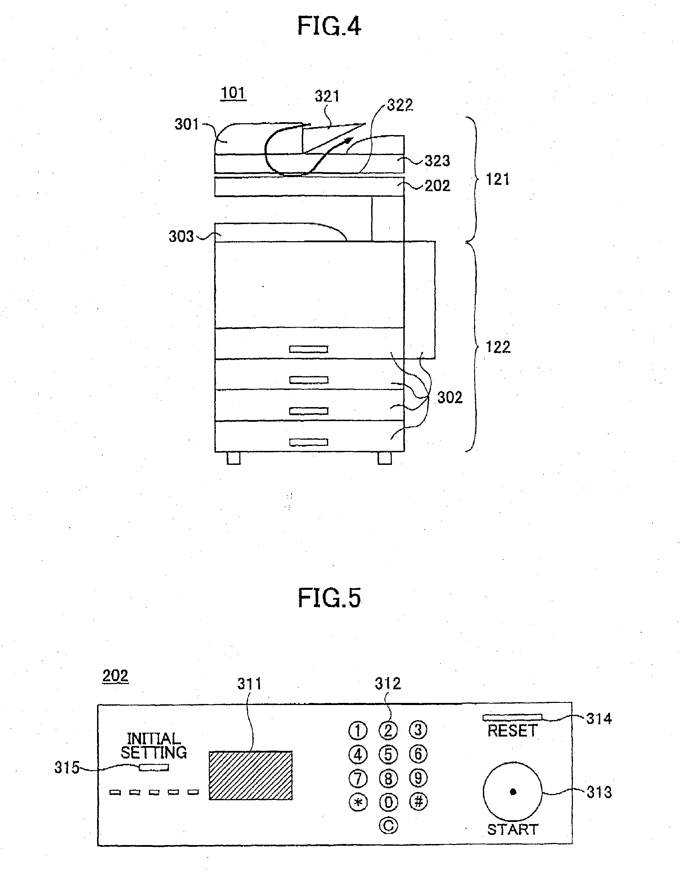

Fig.4 is an external view of the compound machine 101 of Fig.2. Fig.4 shows positions of the image pickup part 121, the printing part 122 and the operation panel 202. Fig.4 further shows a document setting part 301 for setting documents, a paper feed part 302 for feeding printing papers, and a paper ejecting part 303 for ejecting printing papers.

As shown in Fig.5, the operation panel 202 includes a touch panel 311, numerical buttons 312, a start button 313, a reset button 314 and an initial setting button 315.

The touch panel 311 is hardware (touch operation part) for the operator to input data by a touch operation, and is hardware (image display part) for the compound machine 101 to output data on the screen. The numerical buttons 312 are hardware for the operator to input numbers in the compound machine 101 by a button operation. The start button 313 is hardware for performing start operation by a button operation. The reset button 314 is hardware for performing reset operation by a button operation. The initial setting button 315 is hardware for displaying an initial setting screen by an button operation.

### (User information)

Next, management of user information in the compound machine 101 of Fig.2 is described.

In the compound machine 101 of Fig.2, the user information is stored in the HDD 233 (Fig.2) and managed by the UCS 167 (Fig.1), and is mainly used by the scanner application 141 and the facsimile application 144. The user information such as mail addresses and facsimile telephone numbers is used when the compound machine 101 functions as a scanner or the facsimile. The compound machine 101 uses the user information stored in the HDD 233 and managed by the UCS 167 so as to execute image forming processes (processes as copier, printer, scanner or facsimile) in which images are sent to other apparatuses via a network. Although the user information is stored in the HDD 233 in this example, the user information may be stored and managed in the memory card 235 set in the memory card slot 244. The memory card slot 234 and the memory card 235 are a SD memory card slot and a SD memory card for example.

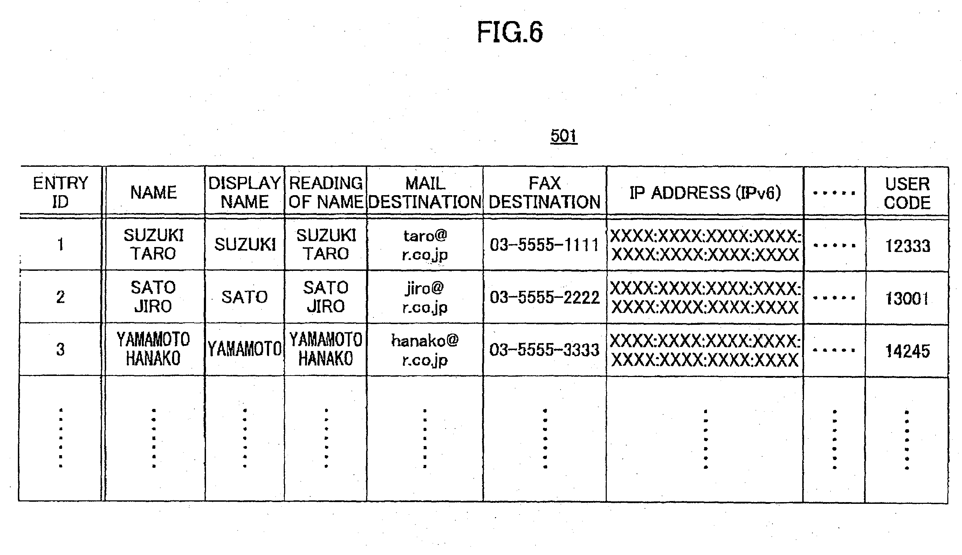

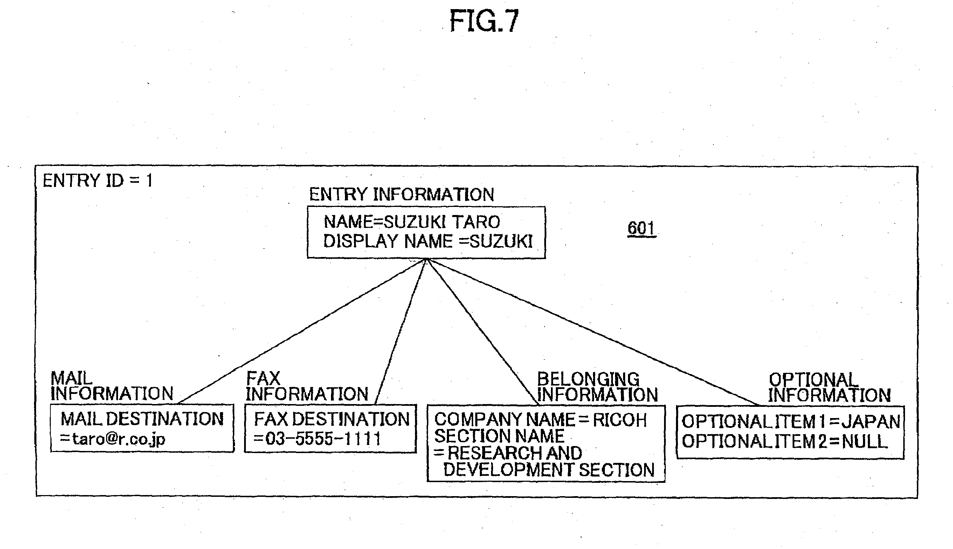

In the compound machine 101 shown in Fig.2, the user information is managed by the UCS 167 by using an address table 501 shown in Fig.6. That is, the user (entry) is managed on the basis of the corresponding user ID (entry ID). In addition, the user information is managed as item values of management items of "name", "display name", "reading of name", "destination of mail", "destination of FAX" and the like. In Fig.6, names in the "name" and "display name" fields are written in kanji. The data structure of the user information of each user is a tree structure as shown in Fig.7. That is, management items : "name" and "displaying name" are parent items, and the management items : "mail destination", "FAX destination" and the like are child items. Although user information of one user is usually stored in one entry, the user information of one user may be stored and managed in a plurality of entries.

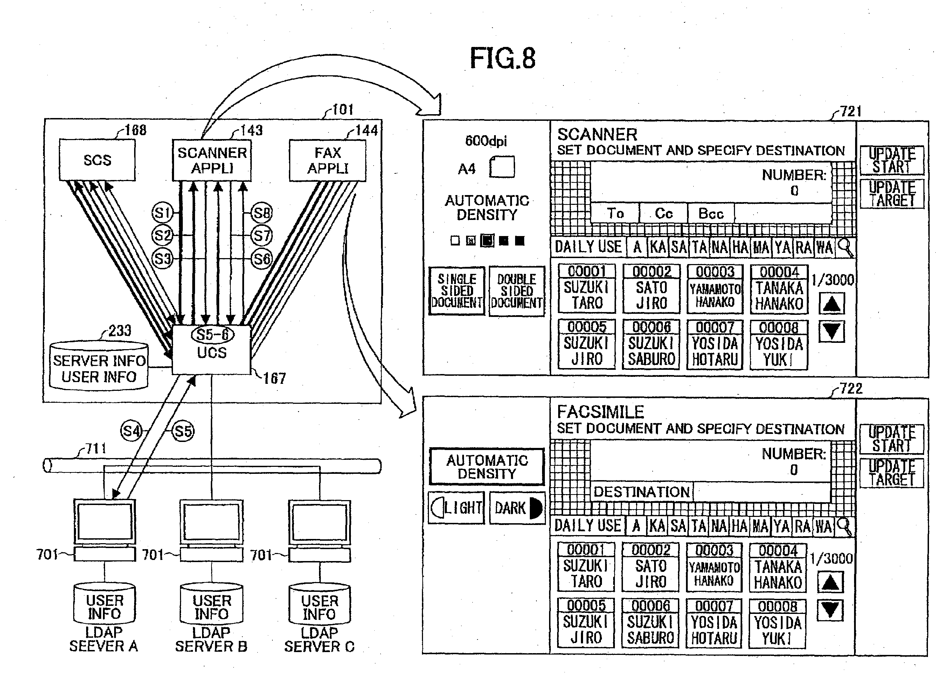

The compound machine 101 of Fig.2 can obtain the user information from a LDAP server via a network. As shown in Fig.8, the compound machine 101 is connected to three LDAP servers 701 (LDAP servers A, B, C) via a LAN 711. The compound machine 101 obtains the user information from the three LDAP servers 701 via the LAN 711.

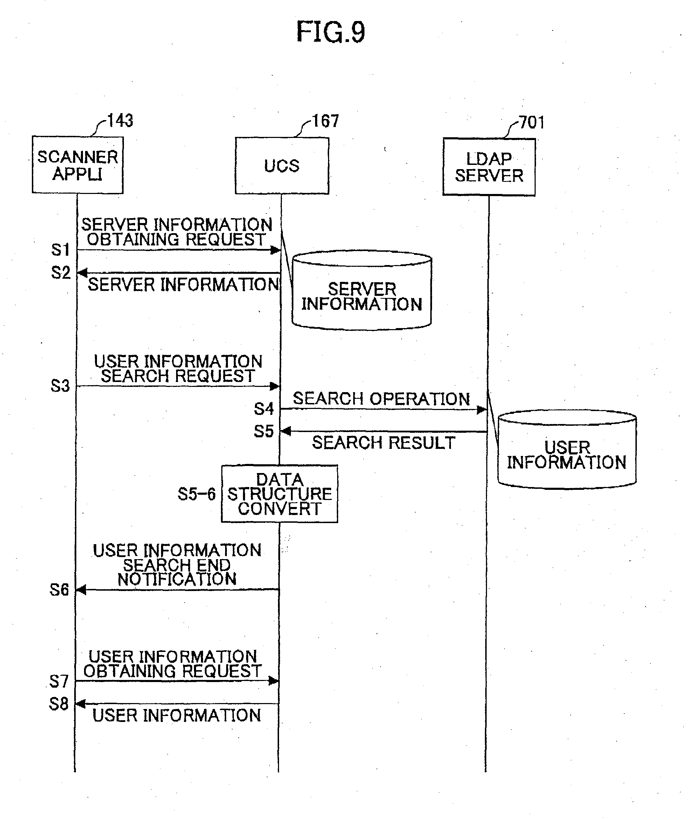

The operation is described in more detail by referring to Figs.8 and 9. The scanner application 143 and the facsimile application 144 displays a scanner screen 721 and a facsimile screen 722 on the touch panel 311 (Fig.5) as shown in Fig.8. When operation information is input via the screen for obtaining (searching) user information from the LDAP server 701, an obtaining request of server information is sent to the UCS 167 from the application (scanner application 143 and the like) in step 1. In response to the request, the server information is sent to the application from the UCS 167 in step 2.

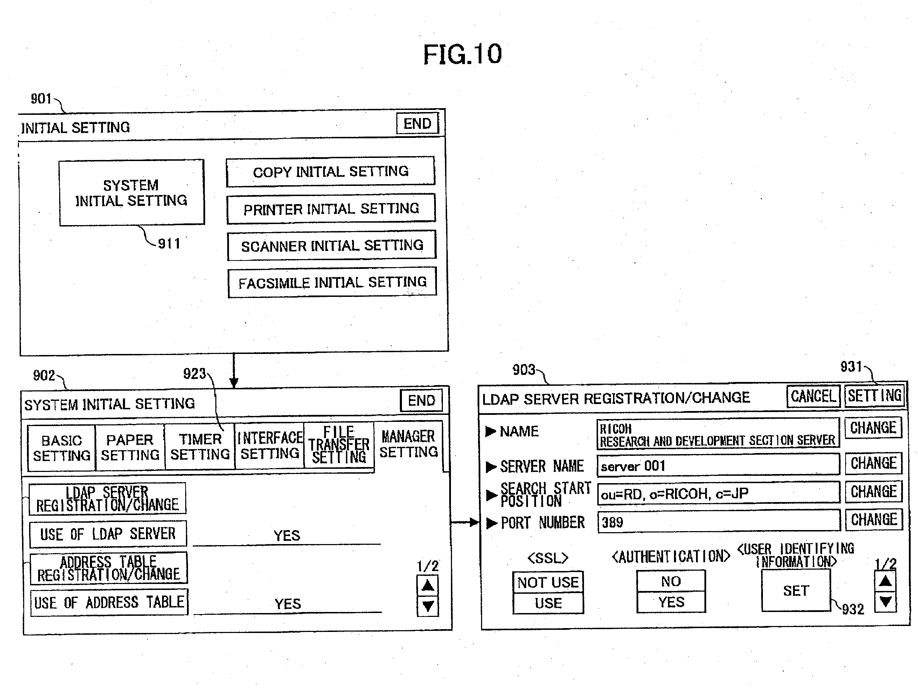

The server information is information on the LDAP server that is connected to the compound machine 101, and is stored in the HDD 233, and is managed by the UCS 167. Management items of the server information are "server name", "port number", "IP address" and the like. The server information can be registered and changed by using the initial setting screen 901 shown in Fig.10. More specifically, when the initial setting button 315 (Fig.5) is pushed, the screen is changed from the scanner screen 721 and the like to the initial setting screen 901. When the system initial setting button 911 is touched on the initial setting screen 901, the screen is changed to the system initial setting screen 902. When a LDAP server registration/change button 921 is touched on the system initial setting screen 902, the screen is changed to a LDAP server registration/change screen 903. When server information is input on the LDAP server registration/change screen 903 and the setting button 932 is touched, the server information is registered or changed. These screens are displayed on the touch panel 311 by the SCS 168.

Next, on the basis of the server information, when the compound machine 101 receives operation information for obtaining (searching) desired user information from a desired LDAP server 701, a searching request of the user information is sent to the UCS 167 from the scanner application 143 and the like in step 3. Then, a searching operation is requested to the LDAP server 701 from the UCS 167 in step 4. Then, the LDAP server 701 sends a search result to the UCS 167 in step 5, so that the UCS 167 sends a search end notification to the scanner application 143 and the like in step 6.

Next, the scanner application 143 and the like sends an obtaining request of user information to the UCS 167 in step 7. Then, the UCS 167 provides the scanner application 143 and the like with the user information in step 8.

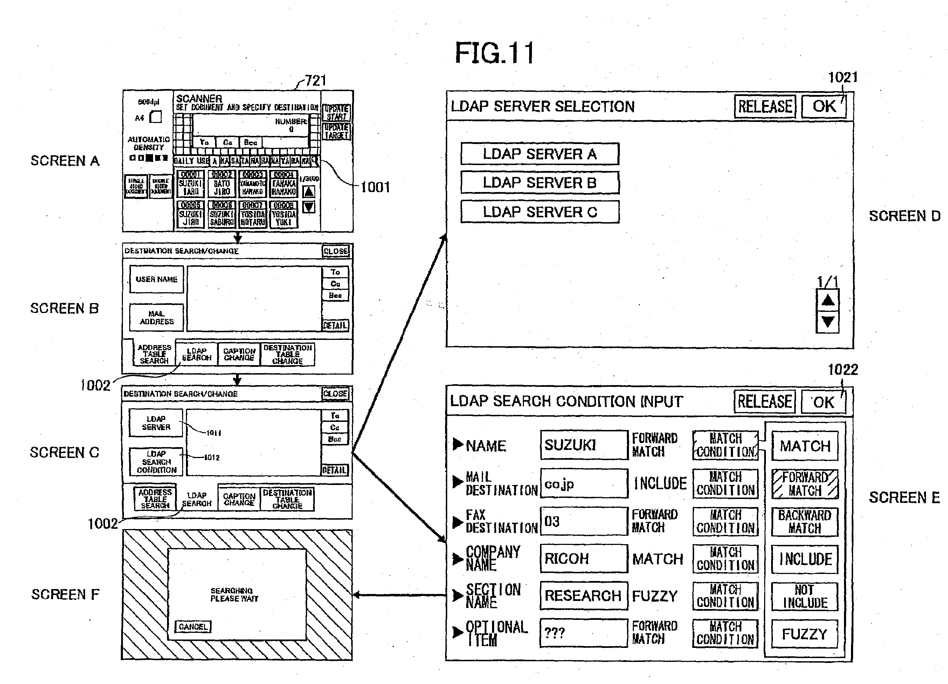

Screen changes in the above-mentioned operations are described with reference to Fig.11. A screen A is the scanner screen 721 of Fig.8. In the screen A, when a loupe button 1001 is touched, the screen A is changed to a screen B. When a LDAP search button 1002 is touched in the screen B, the screen is changed to a screen C. When a LDAP server selection button 1011 is touched in the screen C, the screen C is changed to a screen D. When a LDAP search condition input button 1012 is touched in the screen C, the screen is changed to a screen E. When the LDAP sever is selected on the screen D and an OK button 1021 is touched, the screen is returned to the screen C. When a LDAP search condition is input on the screen E and an OK button 1022 is touched, the screen is changed to a screen F, and the user information is displayed in a short time.

The operation of touching the LDAP search button 1002 on the screen B corresponds to the operation for obtaining (searching) the user information from the LDAP server 701. The operation for selecting the LDAP server on the screen D and touching the OK button 1021 and the operation for inputting the LDAP search condition on the screen E and touching the OK button 1022 correspond to the operation for obtaining (searching) desired user information from the desired LDAP server 701.

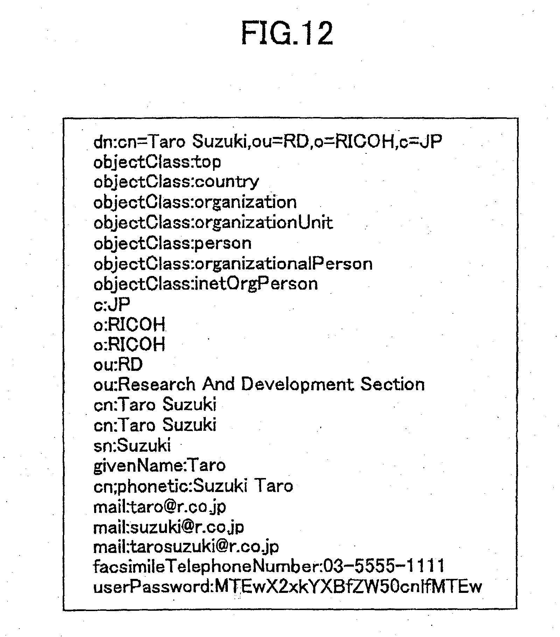

Fig.12 indicates a search result sent to the UCS 167 from the LDAP server 701, that is, user information obtained from the LDAP server 701. The obtaining items of the user information are "cn", "sn", givenName", "mail", "facsimileTelephoneNumber" and the like, since the LDAP server 701 manages the user information as item values (attribute values) of management items (attributes) such as "cn", "sn", givenName", "mail", "facsimileTelephoneNumber" and the like. More exactly, although the LDAP server 701 represents characters such as Japanese other than ASCII characters as Base 64 format, this is omitted for the sake of simplicity of description in Fig.12. In the example shown in Fig.12, values of one of two "ou"s, one of two "cn"s, sn and givenName are represented as kanji characters, and a value of cn;phonetic is represented as hiragana characters.

In the compound machine 101 of Fig.2, data structure of user information obtained from the LDAP server 701 is changed, by the UCS 167, from the data structure of Fig.12 to the data structure of Fig.7 in step 5-6 between steps 5 and 6 as shown in Figs.7 and 8. In the change of the data structure, the TICS 167 changes the obtaining items of user information obtained from the LDAP server 701 to the management items of the user information that can be managed by the compound machine 101 since management items are different between the LDAP server 701 and the compound machine 101. For example, the LDAP server 701 manages a mail address as a management item of "mail" (Fig.12). On the other hand, the compound machine 101 manages the mail address as the management item (Figs.6 and 7) of "mail destination".

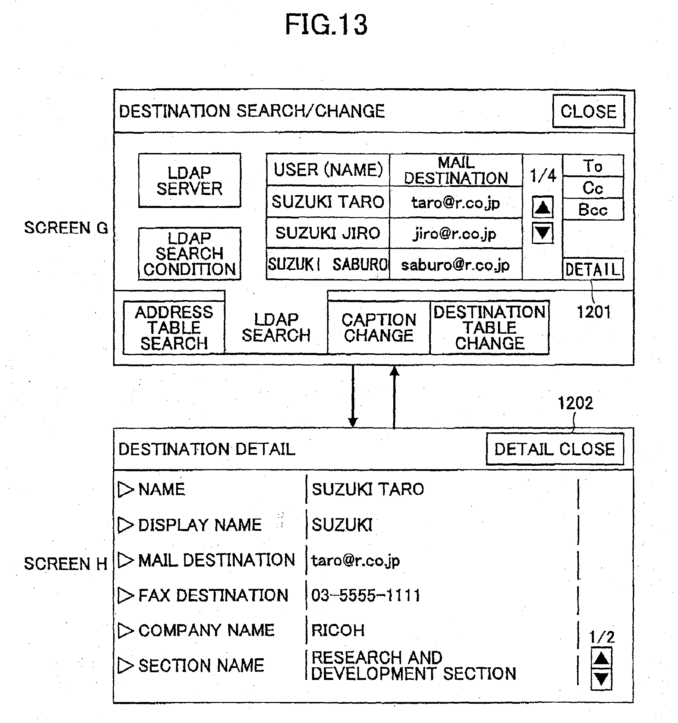

The screen change shown in Fig.13 is a continued screen change from Fig.11. The screen F of Fig.11. is changed to a screen G of Fig.13 in a short time.

In the screen G, user information provided to the scanner application 143 and the like (step 8) from the UCS 167 is displayed. The user information is a search result sent to the UCS 167 from the LDAP server 701. That is, the user information is user information obtained from the LDAP server 701. However, the user information is not exactly the same as user information in the LDAP server 701. The UCS 167 has changed the obtaining items to the management items as mentioned before. For example, the obtaining item "mail" has been changed to the management item "mail destination". In the screen G of Fig.13, many pieces of user information of user : "Suzuki**" are displayed since "Suzuki" is input from the screen E of Fig.11 wherein the LDAP search condition is "name" and "forward match".

When the user : "Suzuki Taro" is touched and a detail button 1201 is touched, the screen is changed to a screen H. On the screen H, details of user information of the user : "Taro Suzuki" are displayed, in which the obtaining items have been changed to the management items. When a detail close button 1202 is touched on the screen H, the screen is returned to the screen G.

In the case where the compound machine 101 obtains the user information from the LDAP server 701 and manages the user information, after the compound machine 101 obtains user information from the LDAP server 701, there may be a case where the user information may be changed in the LDAP server 701. For example, the case may be occurred when a mail address or a facsimile number is changed according to a personnel change or an address change. In such a case, it is convenient for a user if the change of user information managed by the LDAP server 701 can be reflected to user information managed by the compound machine 101. This is described in a later example.

The compound machine 101 may manage not only the user information (referred to as "first user information") obtained from the LDAP server 701 but also user information (referred to as "second user information" (also may be referred to as "third user information")) other than the user information obtained from the LDAP server 701, in which "user billing information" on billing for a user that uses the compound machine 101 and "user restriction information" on restriction for use of the compound machine are examples of the second user information since the "user restriction information" and "user restriction information" are not obtained from the LDAP server 701. It is convenient for the user if the two types of user information can be managed collectively. Also, this is described in a later example.

### (Examples)

Examples on the compound machine of Fig.2 are described in the following.

The UCS 167 in the compound machine 101 stores the user information (first user information) obtained from the LDAP server 701 and the user information (second user information) other than the user information obtained from the LDAP server 701 in the same entry, so that the compound machine 101 can manage the first and second user information collectively.

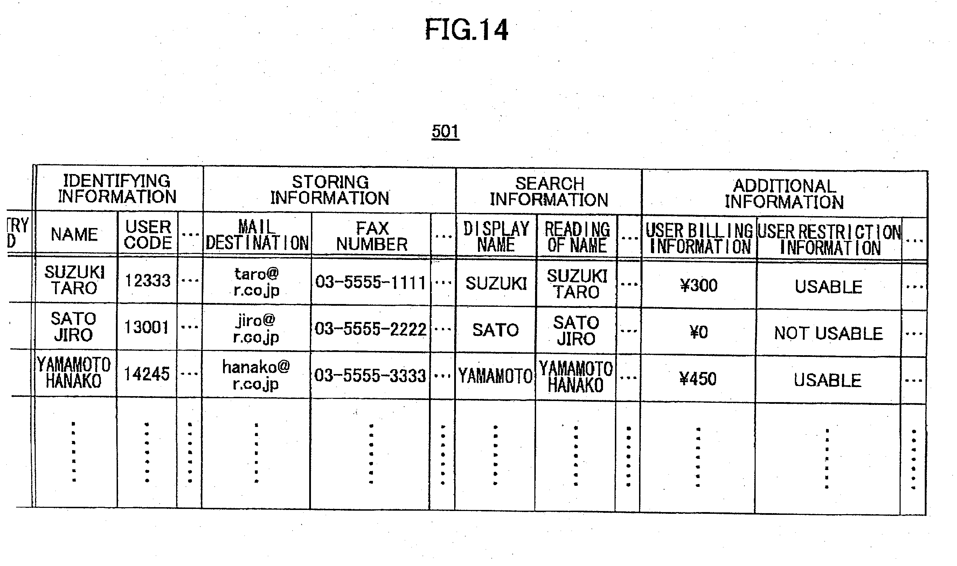

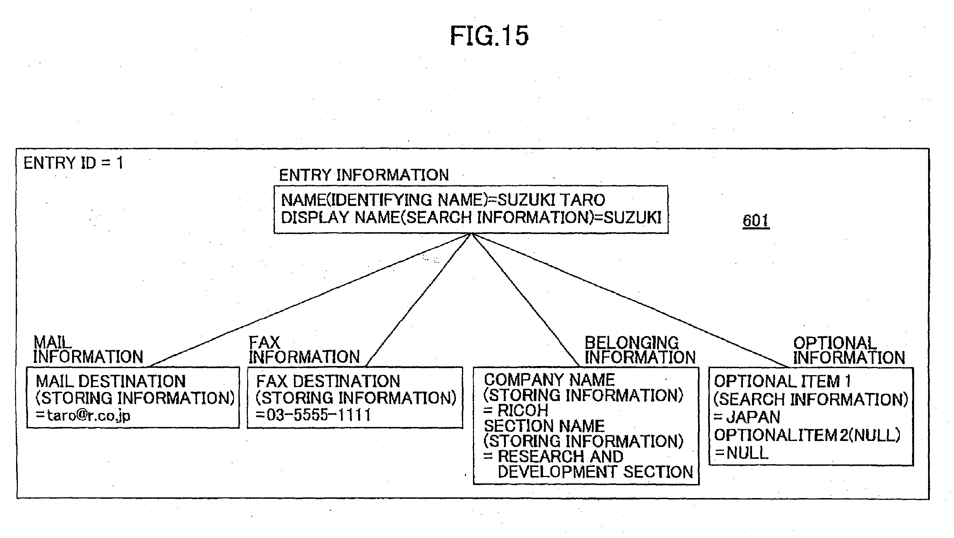

As described before, the user information is managed by the address table 501 shown in Fig.6 by the UCS 167. More specifically, the user information is managed by the address table 501 shown in Fig.14. As shown in Fig.14, the user information is divided into "identifying information", "storing information", "search information", and "additional information". In other words, management items of the user information are classified to the four types. As described before, the data structure of the user information of each user is the tree structure 601 shown in Fig.7. More specifically, the tree structure 601 is configured as shown in Fig.15. In this example, "identifying information", "storing information", "search information", and "additional information" of one user are stored and managed in the same entry.

The additional information is the second user information that is the user information other than user information obtained from the LDAP server 701. The additional information includes user billing information, user restriction information, user group information, server information and the like. That is, the second user information includes input information that is input into the compound machine 101 by an input operation from the operation panel 202 and generated information that is generated in the compound machine 101 and the like. In the compound machine 101 of Fig.2, the UCS 167 manages the additional information as user information that is not discarded when new user information is obtained from the LDAP server 701.

According to the conventional technology, the compound machine 101 discards user information obtained from the LDAP server 701 and stored in the compound machine 101 when the compound machine 101 obtains new user information from the LDAP server 701. Thus, the first user information and the second user information are stored in separate entries such that the second information is not discarded.

Also the compound machine 101 shown in Fig.2 discards user information obtained from the LDAP server 701 and stored in the compound machine 101 when the compound machine 101 obtains new user information from the LDAP server 701 except for a case of update of user information described later. However, the first user information and the second user information are stored and managed in the same entry since the second user information is managed as the additional information. The second user information is not discarded since the second information is managed as the additional information.

The search information is user information (first user information) that is obtained from the LDAP server 701 and that is not linked with user information managed by the LDAP server 701. Although the search information may be automatically determined among pieces of first user information, the search information is selected from the pieces of first user information by a selection operation in this example. In Figs.14 and 15, "display name", "reading of name" and the like that have a relatively low probability of being changed are the search information.

The storing information is the first information and is linked with user information managed by the LDAP server 701. Although the storing information may be automatically determined among pieces of first user information, the storing information is selected from the pieces of first user information by a selection operation in this example. In Figs.14 and 15, "mail destination", "FAX destination" and the like that have a relatively high probability of being changed are the storing information.

The identifying information is the first user information. The identifying information is user information that is user identifying information (entry identifying information) for identifying users (entries). For example, the identifying information is used for linking the storing information with user information managed by the LDAP server 701. Although the identifying information may be automatically determined among pieces of first user information, the identifying information is selected from the pieces of first user information by a selection operation in this example. In Figs.14 and 15, "name", "user code" and the like that are suitable for user identification are the identifying information. As to identifying information, if only the name is used, a person with the same family and personal name may not be identified. In addition, if only the user code is used, the number of users may be limited.

In Figs.14 and 15, "additional information", "search information", "storing information", and "identifying information" are determined from pieces of user information in common for every user. However, these may be determined for each user separately.

### (1) Selection of identifying information, storing information, and search information

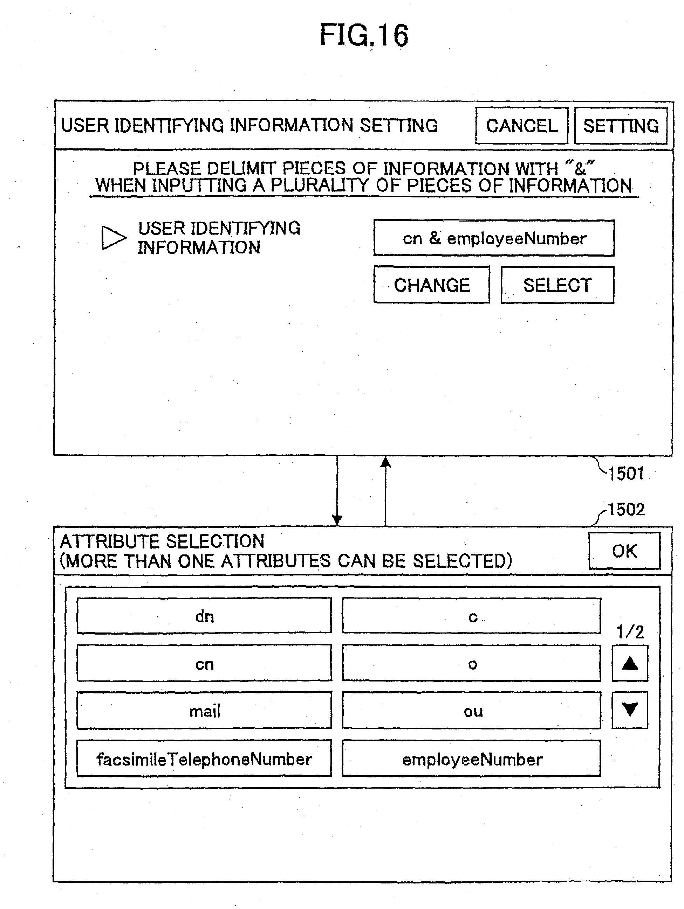

Selection operations for determining the identifying information from the first user information are described with reference to Fig.16, in which the selection is performed for all users in common. When the user identifying information setting button 932 is touched on the LDAP server registration/change screen 903 in Fig.10, the screen is changed to a user identifying information setting screen 1501 of Fig.16.

In the user identifying information setting screen 1501 of Fig.16, the user identifying information can be set by inputting management items (attributes) of user information managed by the LDAP server 701. For example, for inputting "cn" and "employeeNumber", the user touches a selection button on the user information setting screen 1501 in Fig.16, and touches "cn" and "employeeNumber" on an attribute selection screen 1502 of Fig.16.

Accordingly, user information managed as an item value of the management item "name" changed from the management item "cn" and user information managed as an item value of the management item "user code" that is changed from the management item "employeeNumber" are selected as identifying information for all users in common.

For selecting identifying information from the first user information for each user separately, the compound machine 101 may be configured such that user selection can be performed in the user identifying information setting screen 1501 in Fig.16, for example.

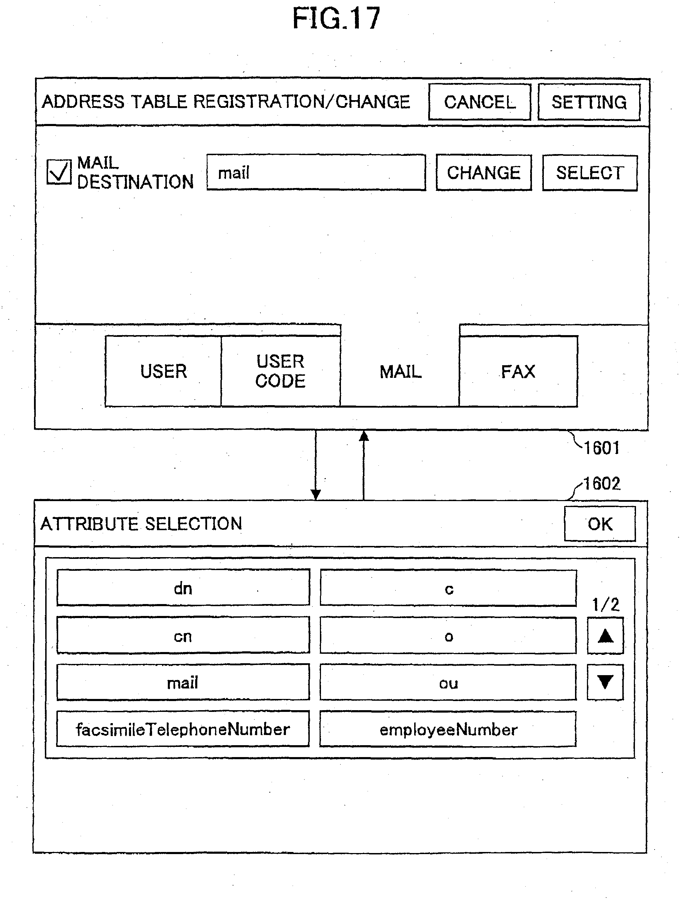

Selection operations for determining the storing information from the first user information are described with reference to Fig.17, in which the selection is performed for all users in common, when the address table registration/change button 922 is touched on the system initial setting screen 902 of Fig.10, the screen is changed to an address table registration/change screen 1601 in Fig.17.

In the address table registration/change screen 1601 in Fig.17, user information managed by the compound machine 101 can be linked with user information managed by the LDAP sever 701 by inputting a management item (attribute) of user information managed by the LDAP server 701 in a field of a management item of user information managed by the compound machine 101. For example, for inputting "mail" in a field of "mail destination" of Fig.17, the user touches "mail" on the attribute selection screen 1602.

Accordingly, user information managed as an item value of the management item "mail destination" that is changed from the management item "mail" is selected as the storing information for all users in common.

For selecting storing information from the first user information for each user, the compound machine 101 may be configured such that user selection can be performed in the address table registration/change screen 1601 in Fig.17, for example.

The first user information that is not selected as the identifying information nor as the storing information is determined as the search information automatically.

### (2) Update of storing information

As mentioned above, the UCS 167 manages the storing information by linking the storing information with user information managed by the LDAP server 701. More specifically, storing information managed as an item value of a management item (mail destination, for example) in the compound machine 101 is linked with user information managed as an item value of a management item (mail, for example) in the LDAP server 701. The UCS 67 starts update of the storing information in response to an operation (update start operation) for starting update of the storing information so as to update the storing information on the basis of the link. Accordingly, changes of user information managed by the LDAP server 701 can be reflected to the user information (storing information) managed by the UCS 167. Especially, in this example, in contrast to a commercial groupware program in which user information is updated irrespective of management items, the compound machine 101 updates the user information on the basis of the "link" for connecting management items of compound machine 101 and management items of LDAP server 701 so that fine update processes can be performed.

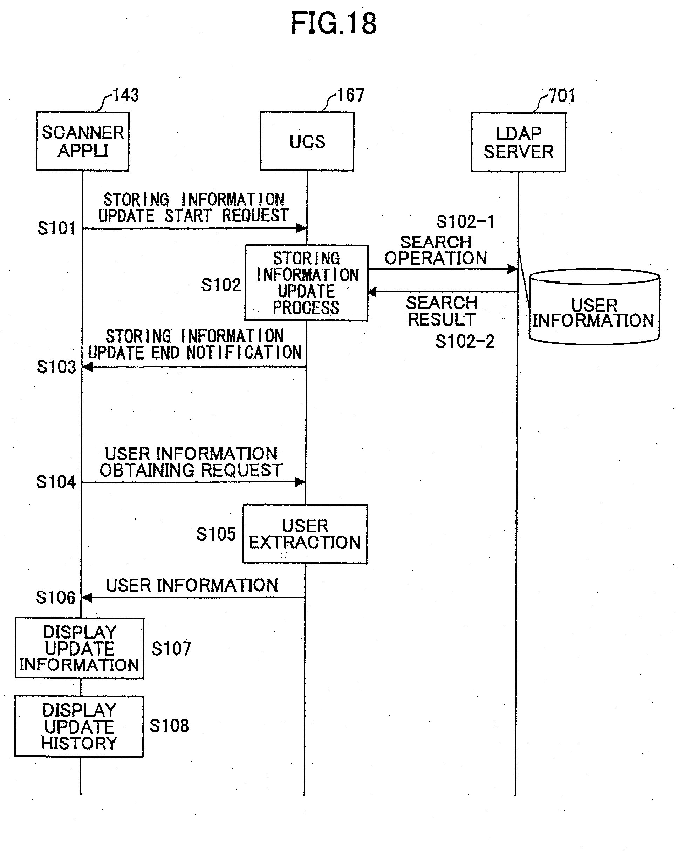

The operation is described with reference to a flowchart of Fig.18 in more detail. When operation information for starting update of storing information is input via the scanner screen 721 or the facsimile screen 722, the scanner application 143 and the like sends an update start request for the storing information to the UCS 167 in step 101. In response to the request, the UCS 167 starts update processes for the storing information in step 102. In the update processes, the UCS 167 sends a search operation request for the storing information to the LDAP server 701 in step 102-1. Then, the LDAP server 701 returns a search result to the UCS 167 in step 102-2. Accordingly, the UCS 167 executes the update processes for the storing information. Next, the UCS 167 sends an update end notification of the storing information to the scanner application 143 and the like in step 103.

After that, an operation for displaying updated information of the storing information is input, the scanner application 143 and the like sends an obtaining request of user information of a user for which the storing information is updated to the UCS 167 in step 104. In response to the request, the UCS 167 extracts user information (entry) in which the storing information is updated from entries stored in the HDD 233 in step 105. Next, the UCS 167 provides user information of the user for which the storing information is updated to the scanner application 143 and the like in step 106. In response to this, the scanner application 143 and the like displays updated information of the storing information on the touch panel 311 in step 107. Further, when an operation for displaying updating history of the storing information is input, the scanner application 143 and the like displays the updating history on the touch panel 311 in step 108.

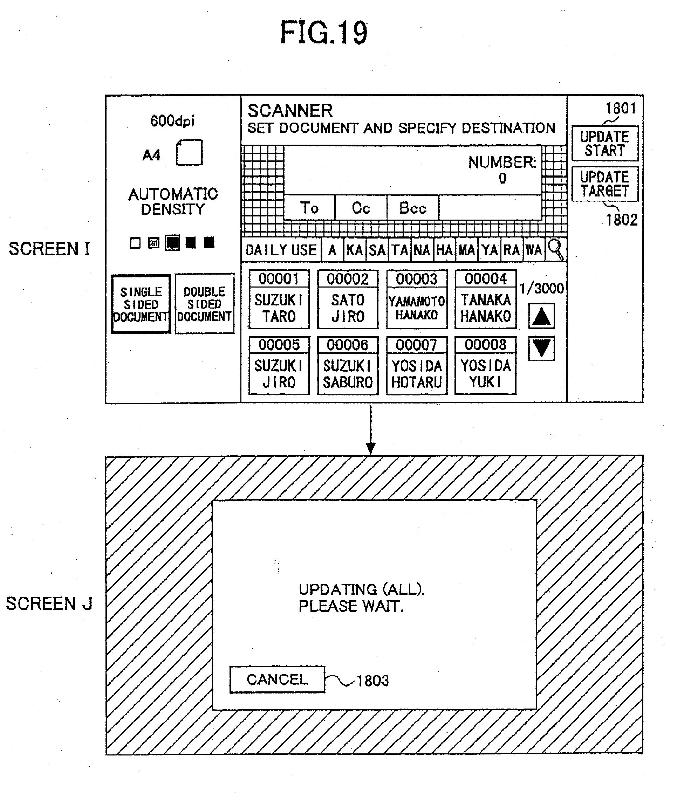

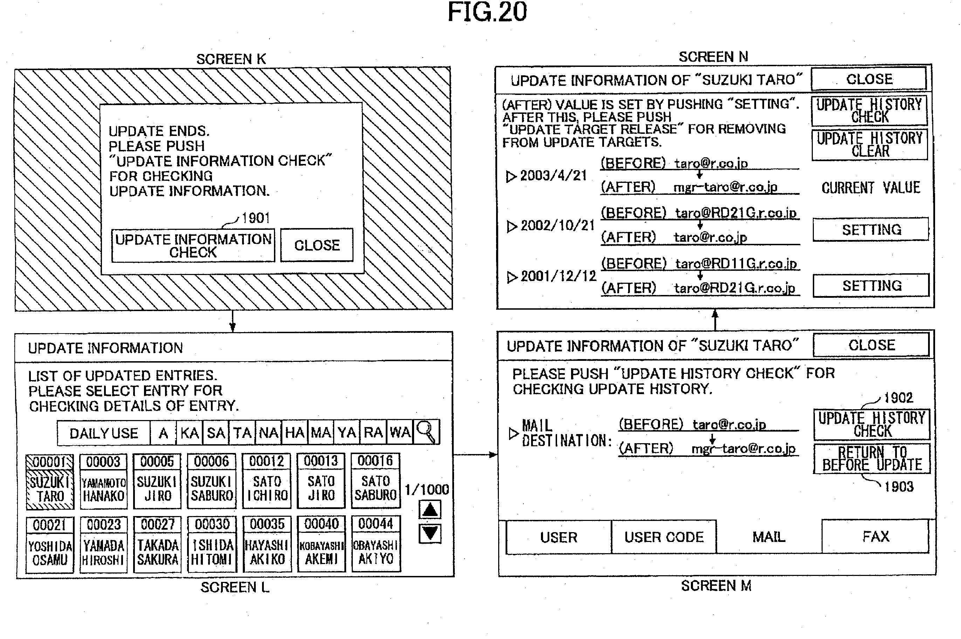

The above-mentioned processes are described with reference to screen changes shown in Figs.19 and 20.

Fig.19 shows a screen change before updating. A screen I is the scanner screen 721 of Fig.8. When an update start button 1801 is touched on the screen I, update of storing information is started and the screen is changed to a screen J showing a waiting state. In a short time, information indicating the end of the update of the storing information is shown. When "cancel button 1803" is touched while waiting for the end of the update process, the update process is cancelled. The operation of touching the update start button 1801 in the screen I corresponds to the operation for starting update of the storing information.

Fig.20 shows screen changes after update. When the update process of the storing information ends, the screen is changed from the screen J of Fig.19 to a screen K of Fig.20. When an update information check button 1901 is touched on the screen K, the screen is changed to a screen L. On the screen L, a list of users (entries) for which storing information is updated is displayed. In the screen L, when a user "Taro Suzuki" is touched, the screen is changed to a screen M. On the screen M, updated information of the storing information for the user "Taro Suzuki" is displayed. In this example, the item value of the management item "mail destination" is changed from "taro@r.co.jp" to "mgr-taro@r.co.jp". When an update history check button 1902 is touched for the management item "mail destination" on the screen M, the screen is changed to a screen N. On the screen N, update history of the item value of the management item "mail destination" is displayed. When a before update return button 1903 is touched for the management item "mail destination", the item value is returned to one before update. The operation of touching the update information checking button 1901 on the screen K corresponds to the operation for displaying update information of the storing information. The operation of touching the update history checking button 1902 on the screen M corresponds to the operation for displaying update history of the storing information.

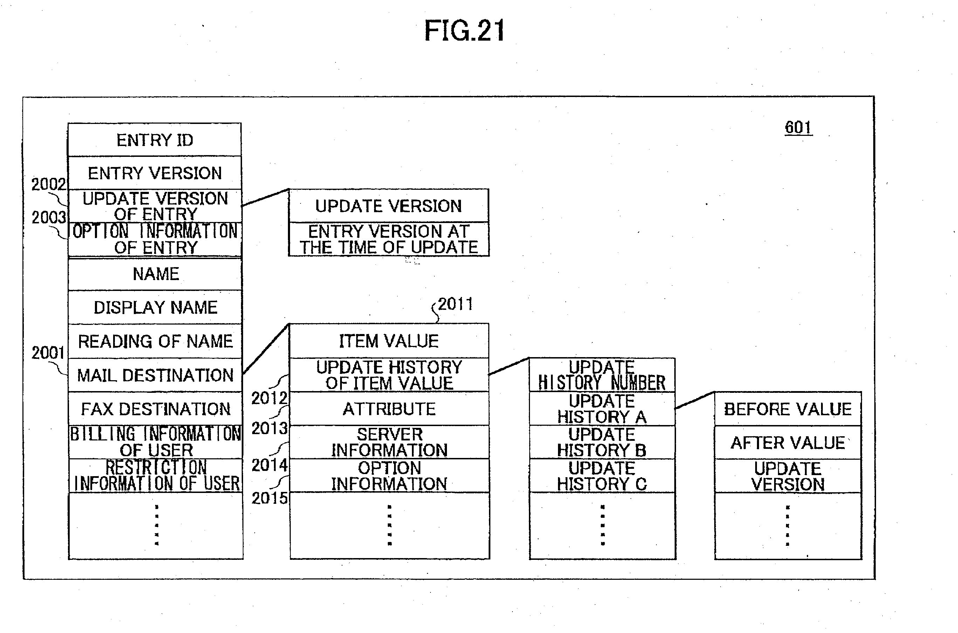

In the following, relationship between update of storing information and management of user information is described. The data structure of user information of each user (each entry) is the tree structure 601 shown in Fig.21. In the lower layer of each management item 2001 includes an item value 2011, an update history 2012 of the item value, an attribute 2013, a server information 2014, an option information 2015 and the like. The lower layer of the update history of the item value includes the number of update histories, an update history A, an update history B, an update history C and the like. The lower layer of each update history includes a before value, an after value, update version and the like.

For example, as to the management item 2001 "mail destination" of the user "Taro Suzuki", the item value 2011 is "mgr-taro@r.co.jp". The before value, after value and the update version of the update history A of the update history 2012 respectively correspond to "taro@r.co.-jp", "mgr-taro@r.co.jp" and "2003/4/21", The before value, after value and the update version of the update history B respectively correspond to "taro@RD21G.r.co.jp", "taro@r.co.jp", and "2002/10/21". The before value, after value and the update version of the update history C respectively correspond to "taro@RD11G.r.co.jp", "taro@RD21G,r.co.jp" and "2001/12/12". By using the information, the compound machine 101 can display the update information and the update history on the screen M and the screen N of Fig.20. The update version is information that corresponds to an updated version such as date and time when the storing information is updated for example.

As an example, as to the management item 2001 "mail destination" for the user "Taro Suzuki", the attribute 2013, the server information 2014 and the option information 2015 respectively stores "'mail", "LDAP server A" and "'storing information". These pieces of information indicate that user information managed as the item value 2011 of the management item 2001 "mail destination" is storing information that is linked with user information managed as the item value of the management item "mail" by the LDAP server A. By using the information, the UCS 167 can update the storing information by using the link. That is, for example, the user information managed as the item value 2011 of the management item 2001 "mail destination" is updated to user information managed as the item value of the management item "mail" by the LDAP sever A. The option information 2015 includes the four types: identifying information, storing information, search information and additional information.

An update version of the whole entry is stored in the update entry version 2002. In this example, date and time when the storing information stored in the entry was updated most recently are stored. By extracting entries that have newest update version 2002, the UCS 167 can perform the process of step 105 in Fig.18 (process of extracting user (entry) in which storing information has been updated).

In the option information 2003 of the entry, information that indicates that the entry (link entry) is related to the LDAP server 701 or that the entry (original entry) is not related to the LDAP server 701 is stored. When the entry is the original entry, the option information 2015 for all management items 2001 of the entry is treated as invalid, so that the storing information stored in the entry is not updated at the time of update. That is, by changing an entry to the original entry, all links of the entry are released. The option information 2003 of the entry can be changed when editing the entry, or an entry may be automatically changed to the original entry when the option information 2015 of a specific management item 2001 (mail destination and the like) is changed to the additional information.

Although the data structure of the user information of each user (each entry) is the tree structure among the management items as shown in Figs.7 and 15, Fig.21 does not show the tree structure for the same of simplicity of description of update of the storing information.

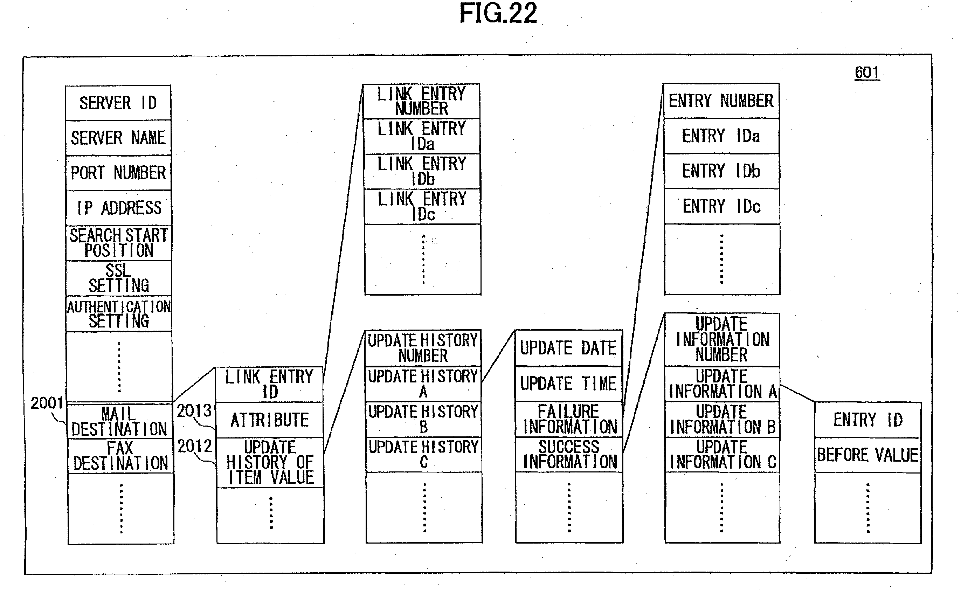

In the following, a modified example of Fig.21 is described. The update information of the storing information may be managed as a form in which the information is added to the server information. In this case, the data structure of the server information of each server is the tree structure 601 shown in Fig.22. Each management item 2001 of the storing information is added to the server information that includes "server ID", "server name", "port number", "IP address", "search start position", "SSL setting", and "authentication setting" and the like. In the lower layer of each management item 2001 of the storing information, "link entry ID", "attribute 2013", "update history 2012 of item value" exist. In the lower layer of the link entry ID, "link entry number", "link entry IDa", "link entry IDb", "link entry IDc" and the like exist. In the lower layer of the update history 2012 of the item value, "update history number", "update history A", "update history B", "update history C" and the like exist. In the lower layer of the update history, "update date", "update time", "failure information", "success information" and the like exist. In the lower layer of the failure information, "entry number", "entry IDa", "entry IDb", "entry IDc" and the like exist. In the lower layer of the success information, "update information number", "update information A", "update information B", "update information C" and the like exist. In the lower layer of the update information, "entry ID", "before value" and the like exist. The update history 2012 of the item value may exist in the lower layer of the link entry ID.

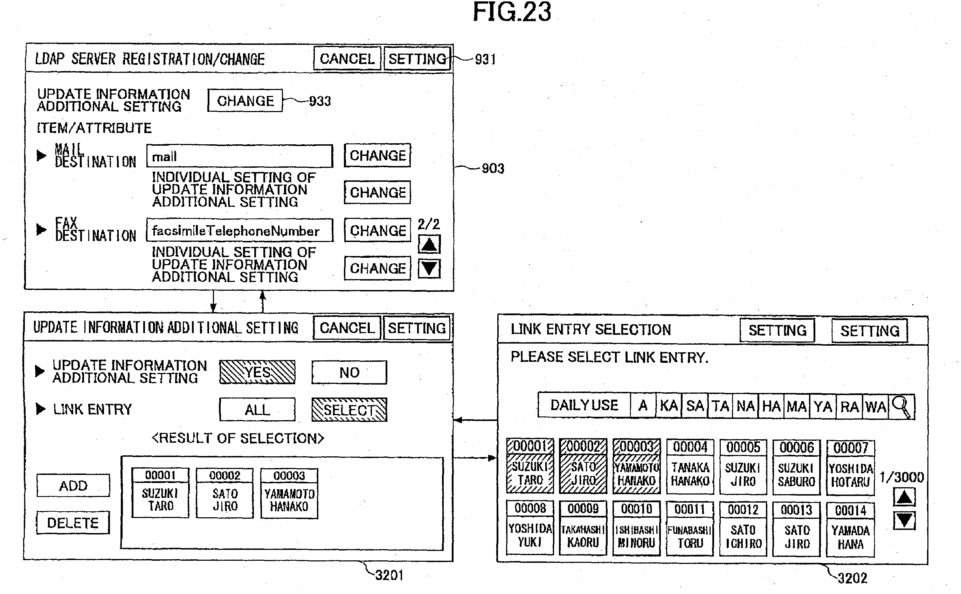

Fig.23 shows screen changes when update information add setting for adding the update information of the storing information to the sever information is registered. When "scroll button" is touched in the LDAP sever registration/change screen 903 of Fig.10, the screen is changed to the LDAP server registration/change screen 903. In this example, an attribute 2013 to be positioned in the lower layer of the management item 2001 of the storing information can be selected. When a change button 933 is touched in the LDAP sever registration/change screen 903 in Fig.23, the screen is changed to an update information add setting screen 3201. In the screen, the user can select whether to register the update information add setting, and can select a link entry ID to be positioned in the lower layer of the management item 2001 of the storing information. When an add button is touched in the update information add setting screen 3201, the screen is changed to a link entry selection screen 3202. In the screen, the user can select a link entry ID to be positioned in the lower layer of the management item 2001 of the storing information.

When a setting button is touched on the link entry selection screen 3202, the screen is returned to the update information add screen 3201. When a setting button is touched on the update information add setting screen 3201, the screen is returned to the LDAP server registration/change screen 903 of Fig.23. When the setting button 931 is touched on the LDAP sever registration/change screen 903 of Fig.23, the above-mentioned update information add setting is registered.

As mentioned above, the UCS 167 can collectively update the storing information on the basis of the link. In addition, the UCS 167 can selectively update the storing information : storing information relating to a LDAP server selected as an update target by a sever selection operation, storing information relating to a management item selected as an update target by an item selection operation, and storing information relating to a user selected as an update target by a user selection operation. In the following, these cases are described in more detail.

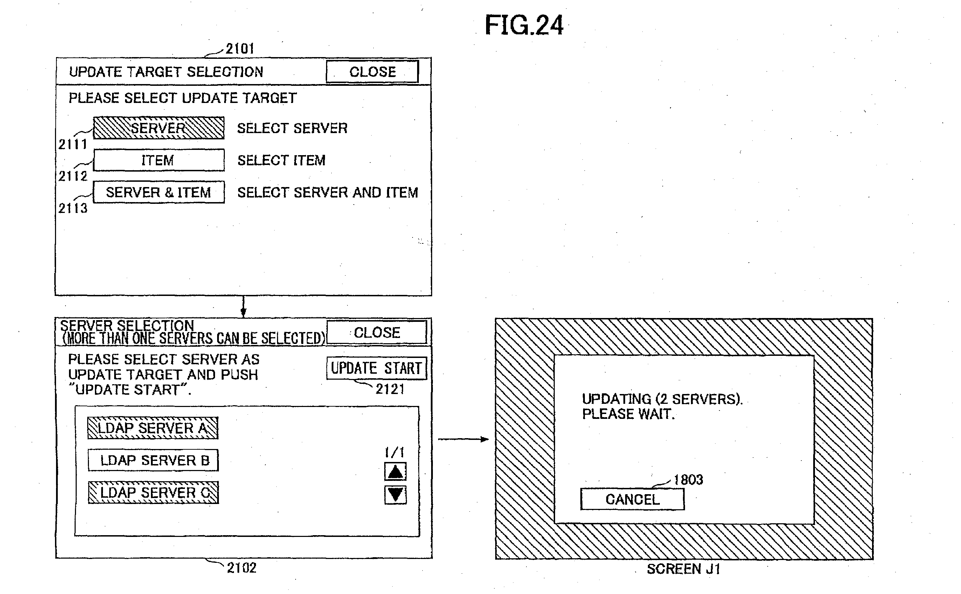

Fig.24 shows screen changes when a LDAP server is selected as an update target. When the update target button 1802 is selected on the screen I in Fig.19 is touched, the screen is changed to an update target selection screen 2101. When a server button 2111 is touched on the update target selection screen 2101, the screen is changed to a server selection screen 2102 for selecting a LDAP server that is an update target. On the sever selection screen 2102, a list of LDAP servers for which sever information is registered on the LDAP sever registration/change screen 903 is displayed. When a LDAP sever is selected on the server selection screen 2102 and an update start button 2121 is touched, update is started, and the screen is changed to a screen J1 (corresponding to the screen J of Fig.19) indicating an update waiting state. In a short time, information indicating that update of the storing information ends is displayed. On the screen J1, the number of LDAP servers selected as update targets is displayed. The operation of selecting a LDAP server as an update target on the server selection screen 2102 corresponds to the server selection operation.

In the update process, storing information relating to the LDAP server selected as the update target is updated. For example, when the LDAP sever A is selected as an update target, the item value 2011 of the management item 2001 in which "LDAP server A" is stored in the server information 2014 and "storing information" is stored in the option information 2015 is updated in the example of Fig.21.

An advantage for selecting an LDAP sever as an update target is that an LDAP server that cannot be accessed due to system down and the like can be excluded as an update target, for example. The compound machine 101 can automatically check whether an LDAP server is in a state in which the server cannot be accessed by using ping(Packet Internet Groper) and the like. In this case, information that indicates whether the server cannot be accessed can be displayed on the server selection screen 2102. The LDAP server that cannot be accessed may be excluded as an update target to be selected, or the LDAP server that cannot be accessed may not be treated as an update target even if the server is selected as an update target, or the LDAP server that cannot be accessed may not be listed on the sever selection screen 2102.

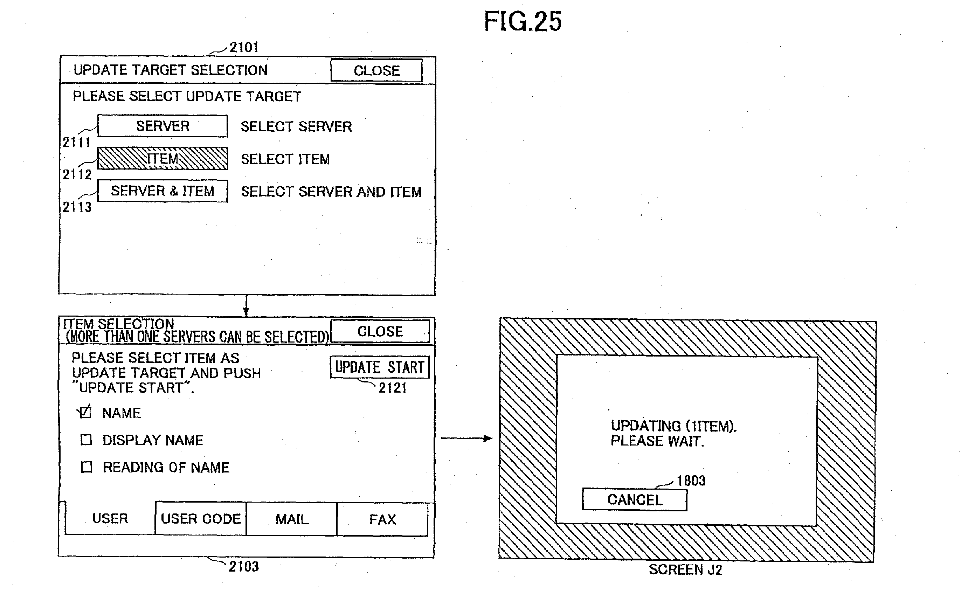

Fig.25 shows screen changes when a management item is selected as an update target. When the update target button 1802 is selected on the screen I in Fig.19, the screen is changed to an update target selection screen 2101. When an item button 2112 is touched on the update target selection screen 2101, the screen is changed to an item selection screen 2103 for selecting an management item that is an update target. On the item selection screen 2103, a list of management items managed by the 'compound machine 101 is displayed. When a management item is selected on the item selection screen 2103 and an update start button 2121 is touched, update is started, and the screen is changed to a screen J2 (corresponding to the screen J of Fig.19) indicating an update waiting state. In a short time, information indicating that update of the storing information ends is displayed. On the screen J2, the number of management items selected as update targets is displayed. The operation of selecting a management item as an update target on the item selection screen 2103 corresponds to the item selection operation.

In the update process, storing information relating to the selected management item is updated. For example, when "mail destination" is selected as an update target, the item value 2011 of the management item 2001 "mail destination" is updated on condition that "storing information" is stored in the option information 2015.

Management items of user information are displayed on the item selection screen 2103, in which only the management items of storing information may be displayed, or check fields may be displayed only near the management items of the storing information.

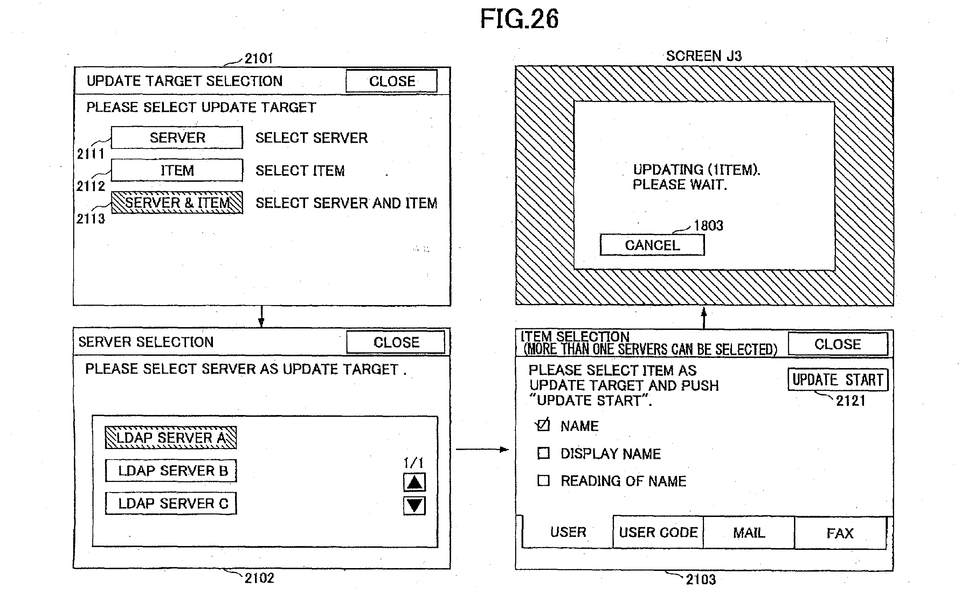

Fig.26 shows screen changes when a LDAP sever and a management item are selected as update targets. When the update target button 1802 is selected on the screen I in Fig.19, the screen is changed to an update target selection screen 2101. When a server & item button 2113 is touched on the update target selection screen 2101, the screen is changed to a server selection screen 2102 for selecting a LDAP server that is an update target first. After a LDAP server is selected as an update target on the server selection screen 2102, the screen is changed to an item selection screen 2103 for selecting an management item that is an update target. When a management item is selected on the item selection screen 2103 and an update start button 2121 is touched, update is started, and the screen is changed to a screen J3 (corresponding to the screen J of Fig.19) indicating an update waiting state. In a short time, information indicating that update of the storing information ends is displayed. On the screen J3, the number of management items selected as update targets is displayed.

In the update process, storing information relating to the selected management item and LDAP server is updated. For example, when the LDAP server A and "mail destination" are selected as update targets, the item value 2011 of the management item 2001 "mail destination" is updated on condition that "LDAP server A" is stored in the server information 2014 and "storing information" is stored in the option information 2015.

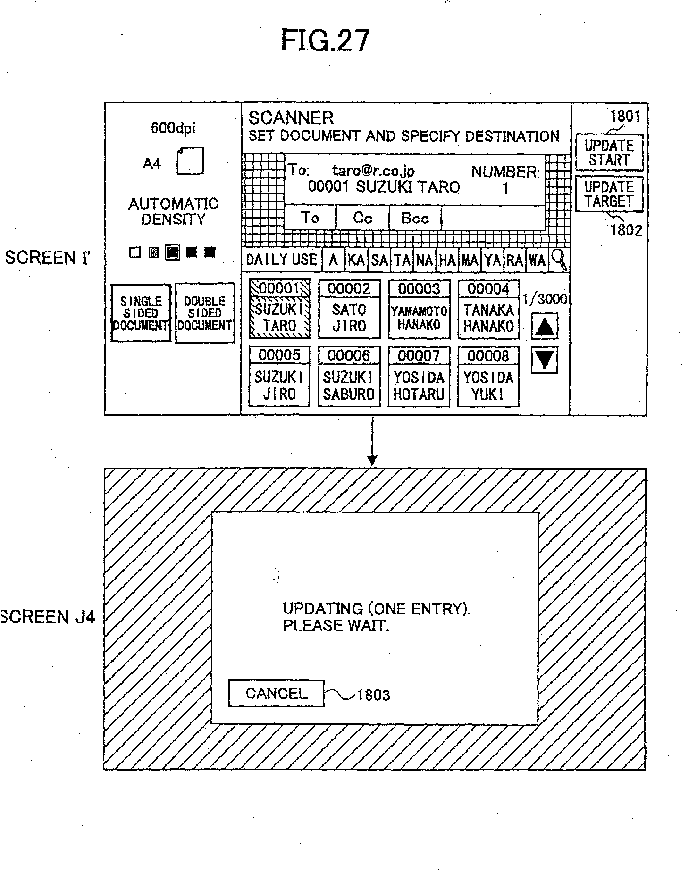

Fig.27 shows screen changes when a user is selected as an update target. When a user "Taro Suzuki" is selected on the screen I in Fig.19, the screen is changed to a screen I'. When an update start button 1801 is touched on the screen I', update is started, and the screen is changed to a screen J4 (corresponding to the screen J of Fig.19) indicating an update waiting state. In a short time, information indicating that update of the storing information ends is displayed. On the screen J4, the number of users selected as update targets is displayed. The operation of selecting a user (entry) as an update target and touching the update start button 1801 corresponds to the user selection operation.

In the update process, storing information relating to the user is updated. For example, when "Taro Suzuki" is selected as an update target, the item value 2011 of the management item 2001 as to user information of the user "Taro Suzuki" in which "storing information" is stored in the option information 2015 is updated.

In the screen I of Fig.19, by selecting a plurality of users (entries) and touching the update start button 1801, a plurality of users (entries) can be selected as update targets.

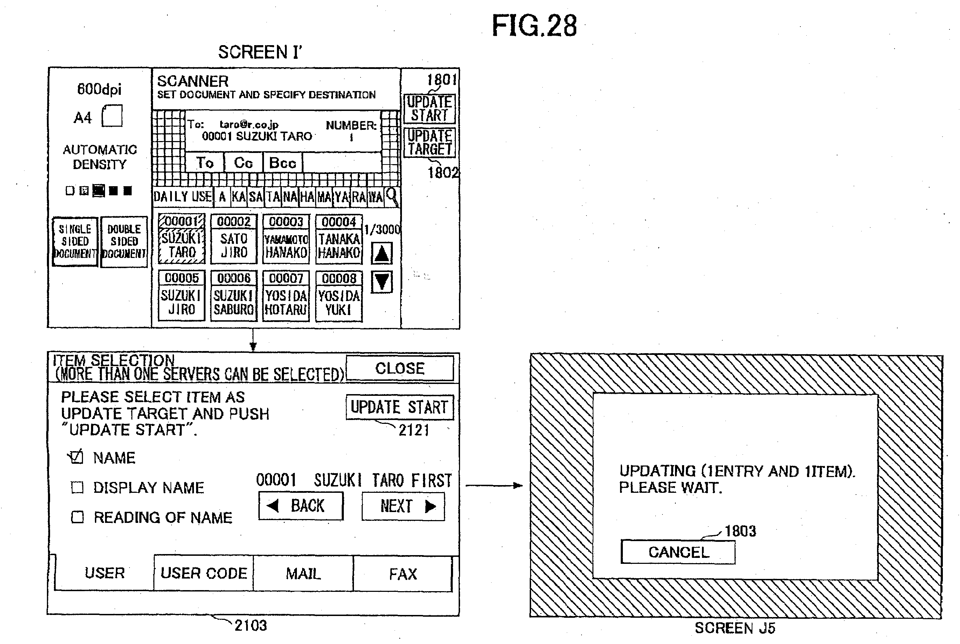

Fig.28 shows screen changes when a user and a management item are selected as update targets. When a user "Taro Suzuki" is selected on the screen I in Fig,19, the screen is changed to a screen I'. When an update start button 1802 is touched on the screen I', the screen is changed to an item selection screen 2103 for selecting a management item as an update target. When a management item is selected as an update target on the item selection screen 2103 and the update start button 2121 is touched, update is started in which the user "Taro Suzuki" is the update target, and the screen is changed to a screen J5 (corresponding to the screen J of Fig.19) indicating an update waiting state. In a short time, information indicating that update of the storing information ends is displayed. On the screen J5, the number of users selected as update targets and the number of the management items selected as the update targets are displayed. The operation of selecting a user (entry) as an update target and touching the update start button 1802 corresponds to the user selection operation.

In the update process, storing information relating to the selected user and selected management item is updated. For example, when "Taro Suzuki" and "mail destination" are selected as update targets, the item value 2011 of the management item 2001 "mail destination" as to the user "Taro Suzuki" is updated on condition that "storing information" is stored in the option information 2015.

Examples other than those shown in Figs.24-28 are, for example, an example in which the LDAP server and the user are selected as update targets and an example in which the LDAP server, the user and the management item are selected as update targets.

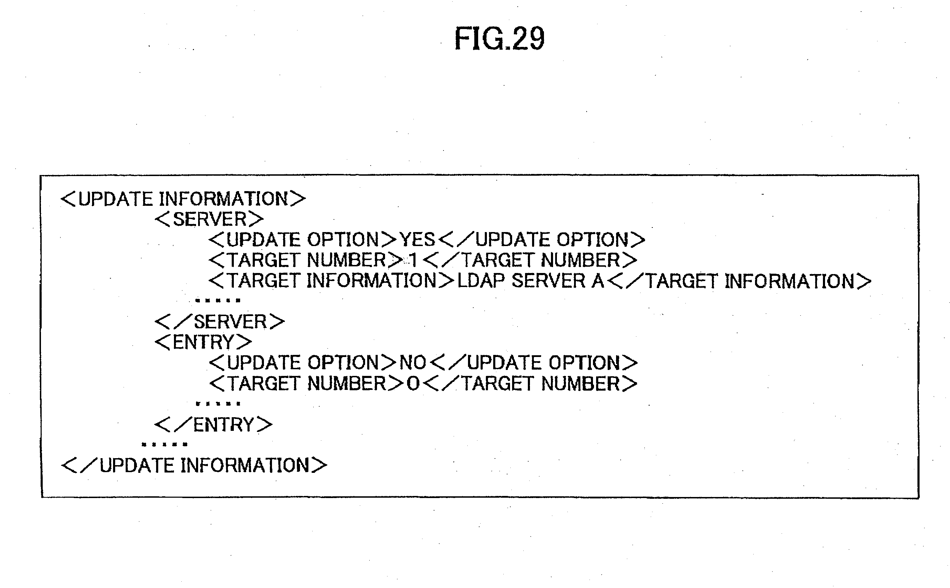

In the following, a case is described in which the update start operation is remotely performed. In response to a remote update start operation from a PC (personal computer) connected to the compound machine 101, the UCS 167 starts update process for the storing information. In this case, the update start request may be described by using XML(eXtensible Markup Language) and may be transmitted by using SOAP (Simple Object Access Protocol) as shown in Fig.29. The XML data shown in Fig.29 includes severs and users (entries) that are update targets. Accordingly, the update targets can be selected in the same way described with reference to Figs.24-28.

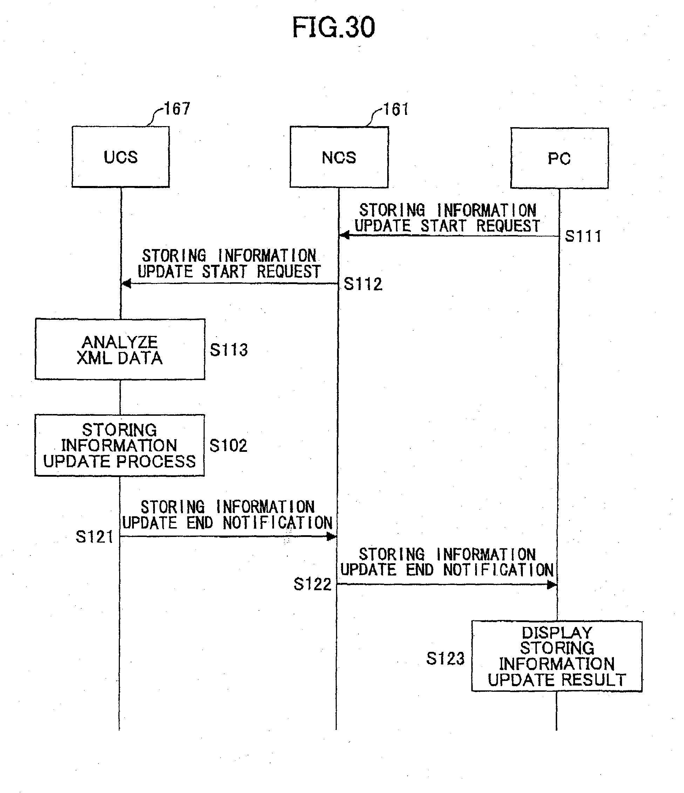

Fig.30 shows a flowchart showing remote update of the storing information. When a remote update start operation is input in an PC connected to the compound machine 101, the PC sends the update start request to the NCS 161 in step 111. In response to the request, the NCS 161 sends the update start request to the UCS 167 in step 112. Then, the UCS 167 analyzes the XML data in step 113 and starts update processes of the storing information in step 102. Next, the UCS 167 sends an update end notification to the NCS 161 in step 121, and the NCS 161 sends the update end notification to the PC in step 122. Then, the PC displays an update result of the storing information in step 123.

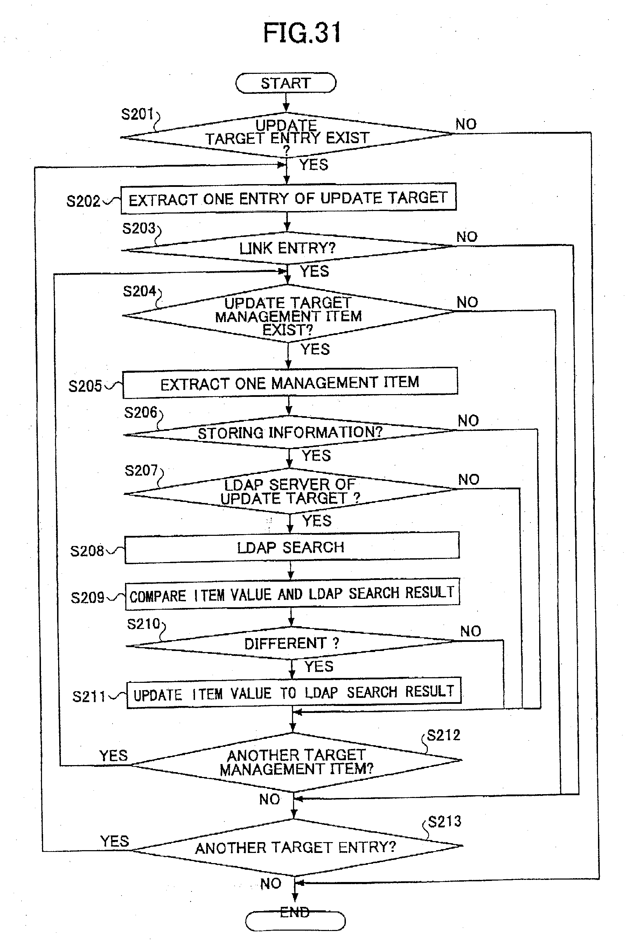

Based on the above description, details of the update process of storing information in step 102 in Fig.18 is described. Fig.31 shows a flowchart of the update process of storing information in step 102 in Fig.18.

If an entry of an update target exists in entries stored in the HDD 233 in step 201, one entry of the update target is extracted in step 202. When there does not exist the target entry, the update process ends.

If the option information 2003 of the extracted entry is the link entry in step 203 and if an management item 2001 of an update target exists in the extracted entry in step 204, one management item of the update target is extracted in step 205. If the option information 2003 of the extracted entry is not the link entry, or the management item 2001 of the update target does not exist in the extracted entry, the step goes to the step 213.

If the option information 2015 of the extracted management item 2001 is the storing information in step 206 and if the sever information 2014 of the extracted management item 2001 is a LDAP server of the update target in step 207, LDAP search for the attribute 2013 of the extracted management item 2001 is performed in step 208. That is, the UCS 167 sends a search operation request for the attribute 2013 to the LDAP server 701 (step 102-1 in Fig.18), and the LDAP server 701 sends the search result to the UCS 167 (step 102-2 in Fig.18). If the option information 2015 of the extracted management item 2001 is not the storing information, or the server information 2014 of the extracted management item 2001 is not the LDAP server of the update target, the step goes to step 212.

Next, the item value 2011 of the extracted management item 2001 is compared with the LDAP search result in step 209. If it is determined that they are not the same in step 210, the item value 2011 of the extracted management item 2001 is updated to the LDAP search result in step 211, and the update version of the extracted entry and the update history of the item value of the extracted management item 2001 are updated. If it is determined that they are the same, the step goes to step 212.

If another management item exists as an update target in the extracted entry in step 212, the step returns to step 205. When further management item 2001 does not exist, the step goes to step 213.

If another entry exists in the entries stored in the HDD 233 in step 213, the step returns to step 202. If further entry does not exist, the update process ends.

In the update process of the storing information, when the scanner application 143 and the like sends the update start request of the storing information to the UCS 167, an API 133 for receiving the update start request is used, in which the API includes a predetermined function. In this case, parameters are passed in which the parameters include the number of LDAP severs of update targets and server IDs, the number of entries of update target and entry IDs, and the number of management items of update targets and the like.

### (3) Generation, edit, delete of entry

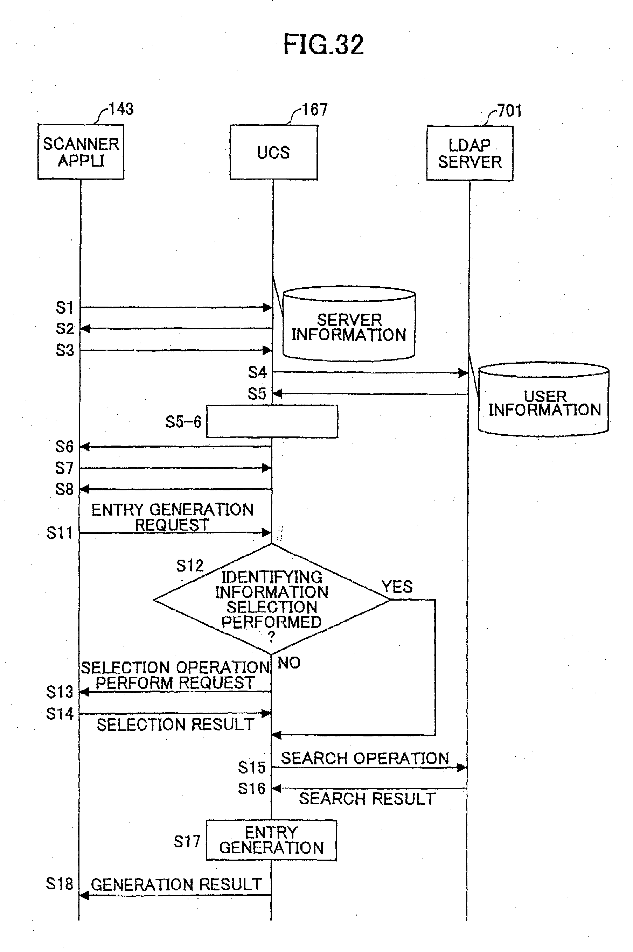

In the following, generation of the entry in the compound machine 101 is described with reference to Fig.32.

Fig.32 is a flowchart of the generation of the entry. As shown in the screen G of Fig.13, while the user information provided to the scanner application and the like from the UCS 167 is displayed, when an operation information for generating an entry of an user by using the user information is input, the scanner application 143 and the like sends an entry generation request of the user to the UCS 167 in step 11. If identifying information is not selected on the user identifying information setting screen 1501 in Fig.16 in step 12, the UCS 167 sends a selection operation execution request to the scanner application 143 and the like from the UCS 167 in step 13, so that the scanner application 143 and the like sends the selection result to the UCS 167 in step 14. Next, the UCS 167 sends a search operation request to the LDAP server 701 for the user in step 15. In response to the request, the LDAP sever 701 sends the search result to the UCS 167 in step 16. Then, the UCS 167 generates an entry for the user in step 17 and sends the generation result to the scanner application 143 and the like in step 18.

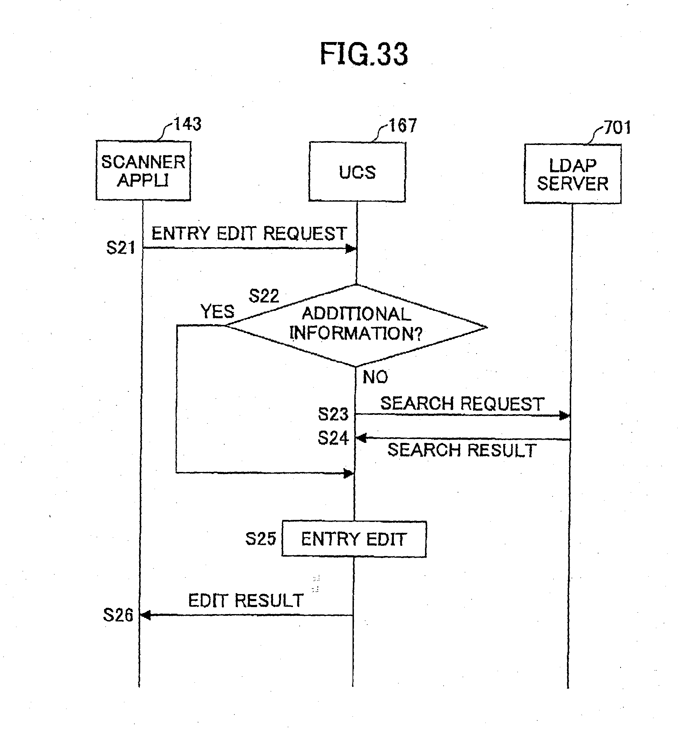

Next, editing of the entry in the compound machine 101 is described with reference to Fig.33.

Fig.33 is a flowchart of the editing of the entry. When an operation information for editing an entry is input via the scanner screen 721 and the like shown in Fig.8, the scanner application 143 and the like sends an editing request of the entry to the UCS 167 in step 21. Next, except for a case where the target of the editing is additional information (step 22), the UCS 167 sends a search operation request for the entry to the LDAP server 701 in step 23, and the LDAP server 701 returns the search result for the entry to the UCS 167 in step 24. Then, the UCS 167 edits the entry in step 25 and sends the edit result to the scanner application 143 and the like in step 26.

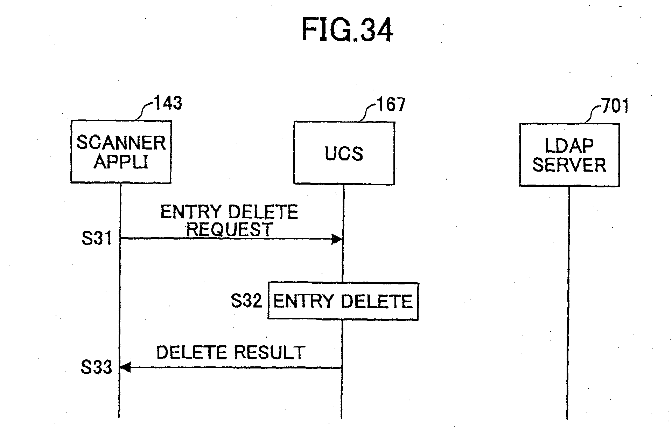

Next, deletion of the entry in the compound machine 101 is described with reference to Fig.34.

Fig.34 is a flowchart of deletion of the entry. When an operation information for deleting an entry is input via the scanner screen 721 and the like shown in Fig.8, the scanner application 143 and the like sends a deletion request for the entry to the UCS 167 in step 31. Then, the UCS 167 deletes the entry in step 32. In response to that, the UCS 167 sends a deletion result to the scanner application 143 and the like in step 33. The deleted entry is not completely deleted. The entry remains as a deleted state. In addition, identifying information and additional information in the deleted entry remains to be stored. The storing information and the search information remain to be storied according to settings.

### (Examples of automatic update)

The compound machine 101 can automatically update the storing information. In the following, examples relating to the automatic update are described.

As mentioned above, the UCS 167 manages the storing information by linking the storing information with user information managed by the LDAP server 701. More specifically, storing information managed as an item value of a management item (mail destination, for example) in the compound machine 101 is linked with user information managed as an item value of a management item (mail, for example) in the LDAP server 701. As described later, the UCS 67 automatically starts update of the storing information at predetermined timing so as to update the storing information on the basis of the link. Accordingly, changes of user information managed by the LDAP server 701 can be reflected to the user information (storing information) managed by the UCS 167. Especially, in this example, in contrast to a commercial groupware program in which user information is updated irrespective of management items, the compound machine 101 updates the user information on the basis of the "link" for connecting management items of compound machine 101 and management items of LDAP server 701 so that fine update processes can be performed.

As an example of the automatic update of storing information, a case where the update timing is determined as a predetermined time by using a timer is described.

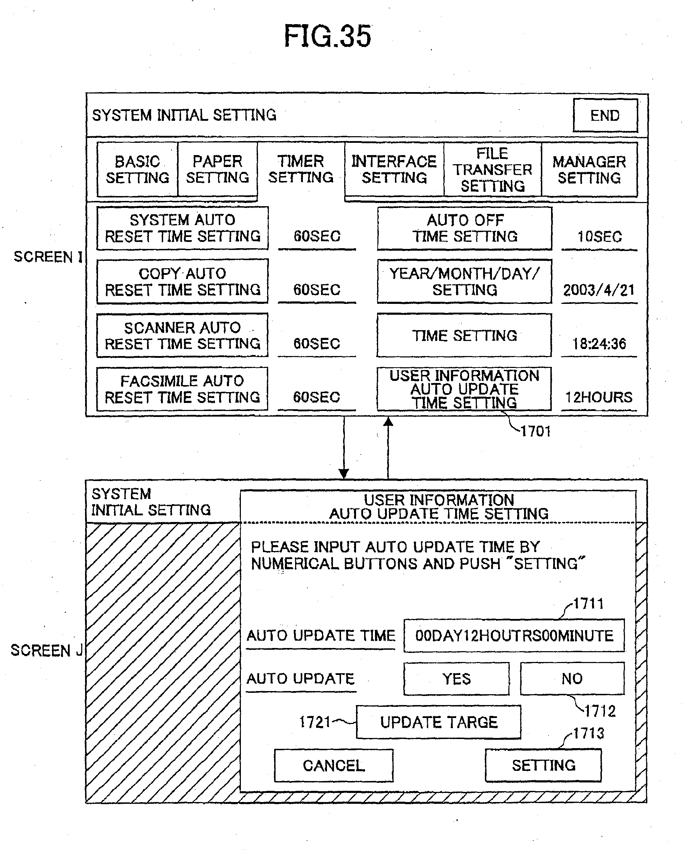

Fig.35 shows screen changes relating to automatic update setting for storing information. When a timer setting button 923 is touched in the system initial setting screen in Fig.10, the screen is changed to a screen I. When an user information automatic update time setting button 1701 is touched, the screen is changed to a screen J. An automatic update time setting field 1711 is a field for setting timing at which the update is automatically started. An automatic update setting field 1712 is a field for setting information indicating whether update is automatically started at the timing. In the screen J, if "12 hours" is input in the automatic update time setting field 1711 and "Yes" is selected in the automatic update setting field 1712 and the setting button 1713 is touched, setting is completed in which the update of the storing information is performed every 12 hours from the time.

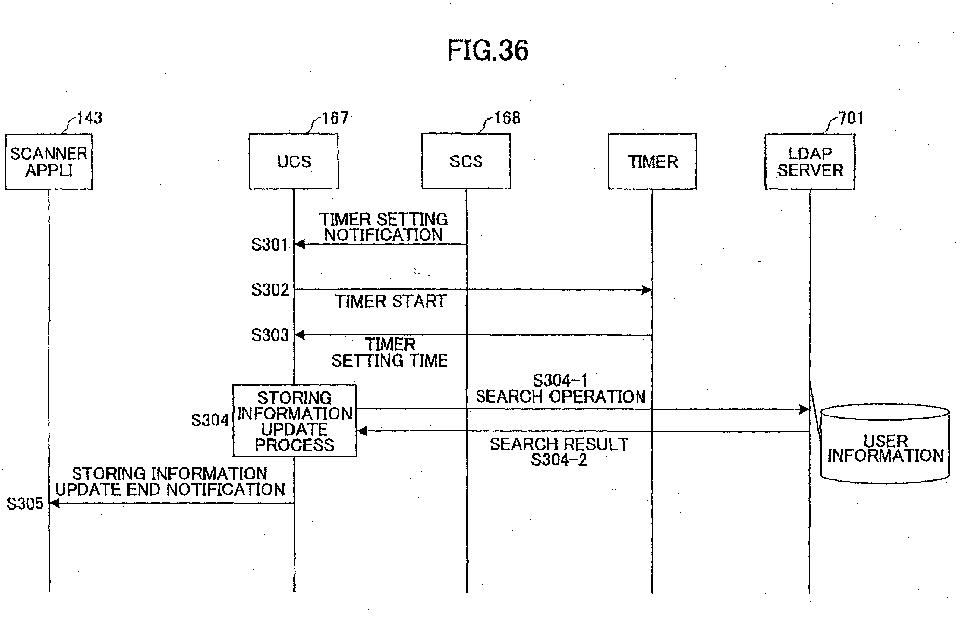

Fig.36 is a flowchart showing automatic update of storing information. When the setting button 1713 is touched in the screen J in Fig.35, the SCS 168 sends a timer setting notification to the UCS 167 in step 301. In response to the notification, the UCS 167 starts a timer that is provided in the OS in step 302. At this time, if the timer is already started, the timer is restarted. When the timer counts to a setting time in step 303, the UCS 167 starts the process of update of the storing information in step 304. In the update process, the UCS 167 sends a search operation request for the storing information to.the LDAP server 701 in step 304-1. Then, the LDAP server 701 returns the search result for the storing information to the UCS 167 in step 304-2. Accordingly, the UCS 167 performs the update process for the storing information. Next, the UCS 167 sends an update end notification of the storing information to the scanner application 143 and the like in step 305.

As mentioned above, the UCS 167 can collectively update the storing information on the basis of the link. In addition, the UCS 167 can selectively update the storing information : storing information relating to a LDAP server selected as an update target by a sever selection operation, storing information relating to a management item selected as, an update target by an item selection operation, and storing information relating to a user selected as an update target by a user selection operation. In the following, these cases are described in more detail.

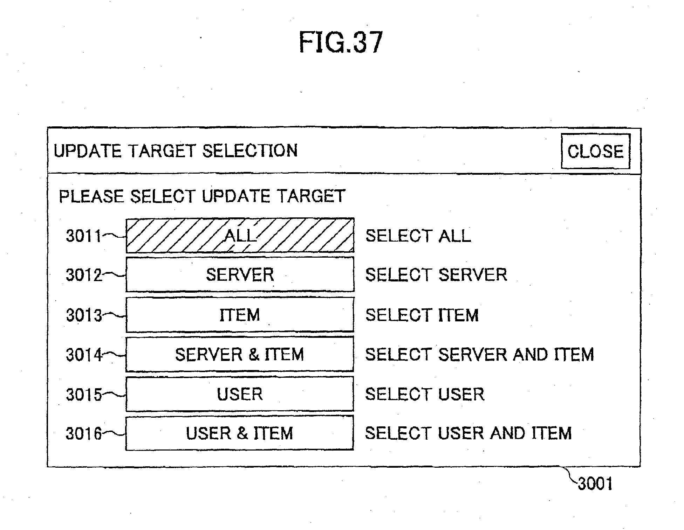

Fig.37 shows screen changes showing a case where the update target is all storing information. When an update target button 1721 is touched in the screen J in Fig.35, the screen is changed to the update target selection screen 3001. In the update target selection screen 3001, when an all button 3011 is touched, the screen is changed to the screen J in Fig.35, so that the setting is performed in which all storing information are update targets in the automatic update process.

In the automatic update under this setting, all storing information are updated. In the example of Fig.21, item values 2011 of all management items 2001 each of which includes "storing information" in the option information 2015 are updated.

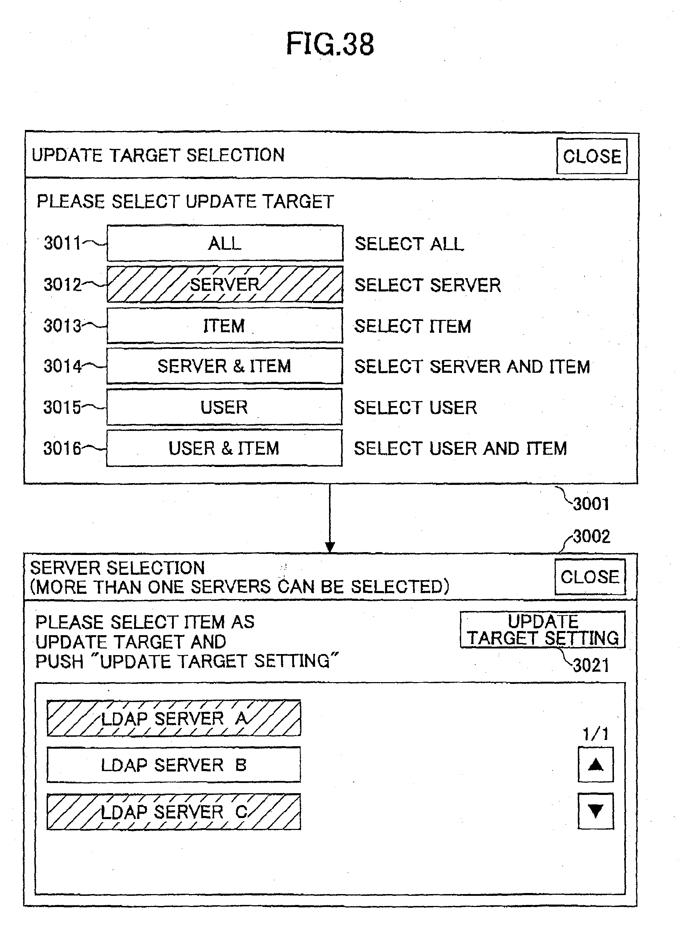

Fig.38 shows screen changes when a LDAP server is selected as an update target. When an update target button 1721 is selected on the screen J in Fig. 35, the screen is changed to an update target selection screen 3001. When a server button 3012 is touched on the update target selection screen 3001, the screen is changed to a server selection screen 3002 for selecting a LDAP server that is an update target. On the sever selection screen 3002, a list of LDAP severs for which sever information is registered on the LDAP sever registration/change screen 903 of Fig.10. When a LDAP sever is selected on the server selection screen 3002 and an update start button 3021 is touched, the screen is returned to the screen J in Fig.35, and setting is performed in which storing information for the selected LDAP server is the update target in the automatic update process. The operation of selecting a LDAP server as an update target on the server selection screen 3002 corresponds to the server selection operation.

When automatic update is performed under this setting, storing information for the LDAP server selected as the update target is updated. For example, when the LDAP sever A is selected as an update target, the item value 2011 of the management item 2001 in which "LDAP server A" is stored in the server information 2014 and "storing information" is stored in the option information 2015 is updated in the example of Fig.21.

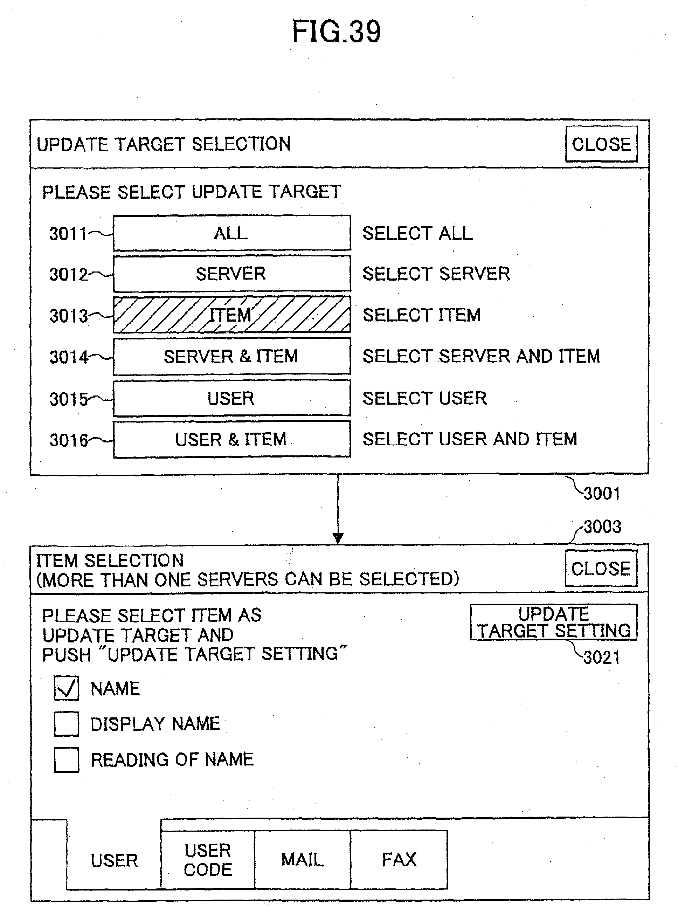

Fig.39 shows screen change when a management item is selected as an update target. When the update target button 1721 is selected on the screen J in Fig.35, the screen is changed to an update target selection screen 3001. When an item button 3013 is touched on the update target selection screen 3001, the screen is changed to an item selection screen 3003 for selecting a management item that is an update target. On the item selection screen 3003, a list of management items managed by the compound machine 101 is displayed. When a management item is selected on the item selection screen 3003 and an update target setting button 3021 is touched, the screen is returned to the screen J in Fig.35, and setting is performed in which storing information relating to the selected management item is the update target in the automatic update process. The operation of selecting a management item as an update target on the item selection screen 3003 corresponds to the item selection operation.

When automatic update is performed under this setting, storing information relating to the selected management item is updated. For example, when "mail destination" is selected as an update target, the item value 2011 of the management item 2001 "mail destination" is updated on condition that "storing information" is stored in the option information 2015.

Management items of user information are displayed on the item selection screen 3003, in which only the management items of storing information may be displayed, or check fields may be displayed only near the management items of the storing information.

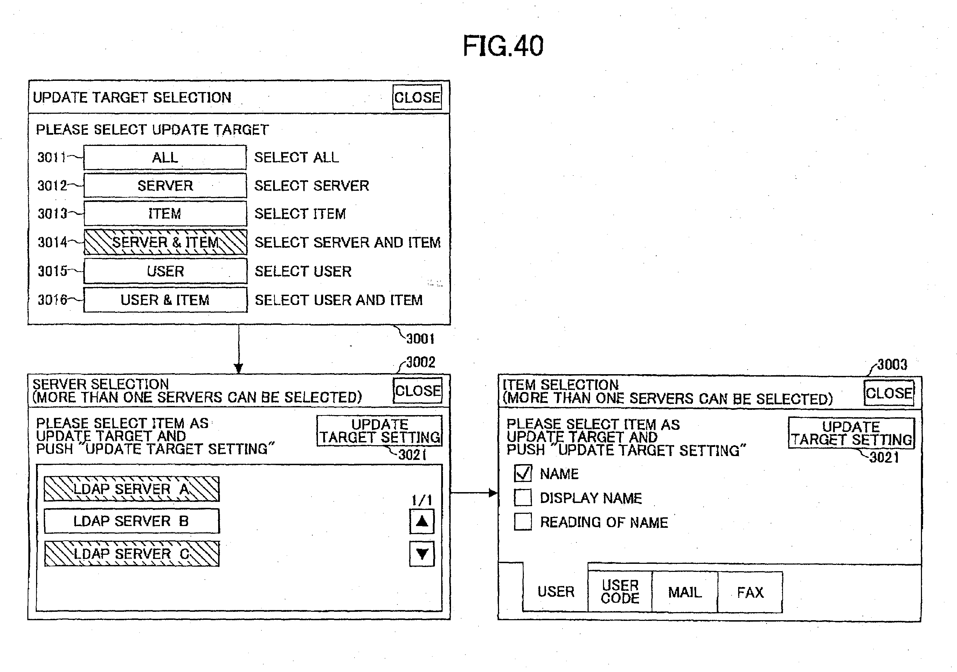

Fig.40 shows screen changes when a LDAP sever and a management item are selected as update targets. When the update target button 1721 is selected on the screen J in Fig.35, the screen is changed to an update target selection screen 3001. When a server & item button 3014 is touched on the update target selection screen 3001, the screen is changed to a server selection screen 3002 for selecting a LDAP server that is an update target first. After a LDAP server is selected as an update target on the server selection screen 3002, the screen is changed to an item selection screen 3003 for selecting an management item that is an update target. When a management item is selected on the item selection screen 3003 and the update target setting button 3021 is touched, the screen is returned to the screen J in Fig.35, and setting is performed in which storing information relating to the selected LDAP server and the selected management item are set as the update targets in the automatic update process.

When automatic update is performed under this setting, storing information relating to the selected management item and LDAP server is updated. For example, when the LDAP server A and "mail destination" are selected as update targets, the item value 2011 of the management item 2001 "mail destination" is updated on condition that "LDAP server A" is stored in the server information 2014 and "storing information" is stored in the option information 2015.

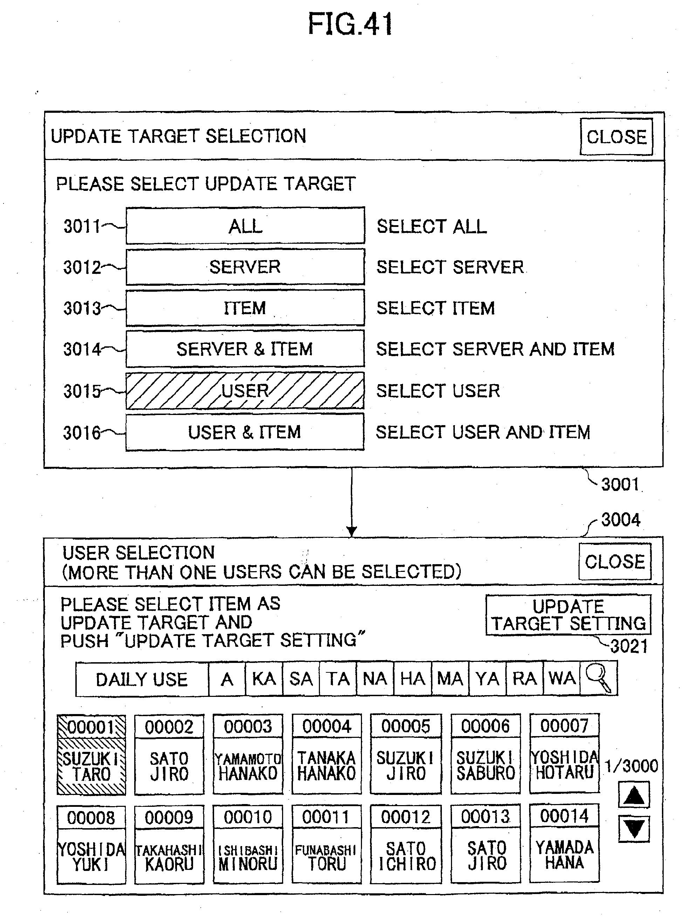

Fig.41 shows screen changes when a user is selected as an update target. When the update target button 1721 is selected on the screen J in Fig.35, the screen is changed to an update target selection screen 3001. When a user button 3015 is touched on the update target selection screen 3001, the screen is changed to a user selection screen 3004 for selecting a user as an update target. On the user selection screen 3004, a list of users managed by the compound machine 101 is displayed. When a user is selected on the user selection screen 3004 and the update target setting button 3021 is touched, the screen is returned to the screen J in Fig.35, and setting is performed in which storing information relating to the selected user is set as the update target in the automatic update process. The operation of selecting a user (entry) as an update target on the user selection screen 3004 corresponds to the user selection operation.

When automatic update is performed under this setting, storing information relating to the user is updated. For example, when "Taro Suzuki" is selected as an update target, the item value 2011 of the management item 2001 for the user "Taro Suzuki" in which "storing information" is stored in the option information 2015 is updated.

On the user selection screen 3004, entries are displayed in which only link entries may be displayed or only link entries may be selected.

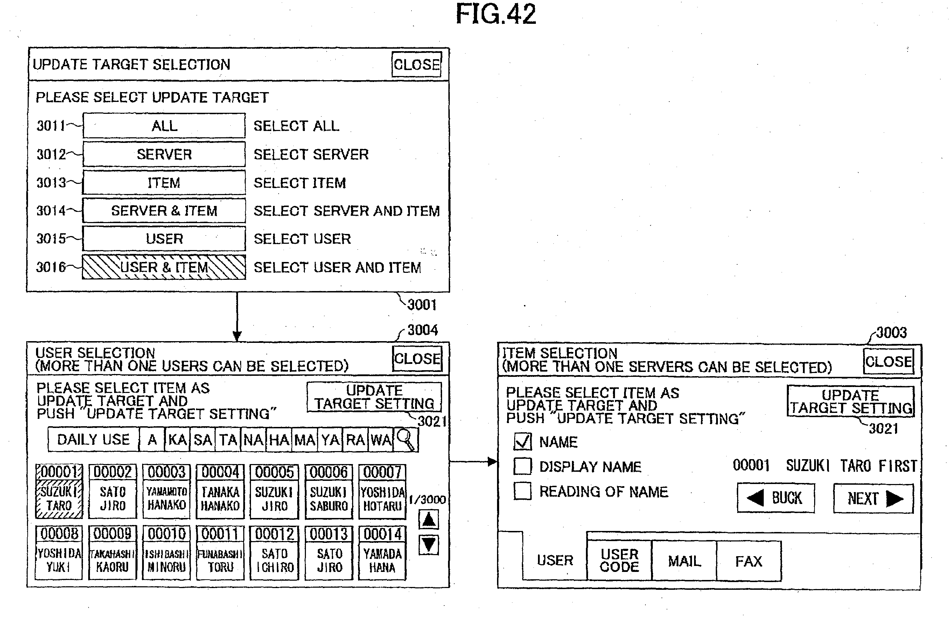

Fig.42 shows screen changes when a user and a management item are selected as update targets. When the update target button 1721 is selected on the screen J in Fig.35, the screen is changed to an update target selection screen 3001. When a user & item button 3016 is touched on the update target selection screen 3001, the screen is changed to a user selection screen 3004 for selecting a user as an update target first. After a user is selected as an update target on the user selection screen 3004 and the update target setting button 3021 is touched, the screen is changed to an item selection screen 3003 for selecting an management item that is an update target. When a management item is selected on the item selection screen 3003 and the update target setting button 3021 is touched, the screen is returned to the screen J in Fig.35, and setting is performed in which storing information relating to the selected user and the selected management item are set as the update targets in the automatic update process.

When automatic update is performed under this setting, storing information relating to the selected user and selected management item is updated. For example, when "Taro Suzuki" and "mail destination" are selected as update targets, the item value 2011 of the management item 2001 "mail destination" as to the user "Taro Suzuki" is updated on condition that "storing information" is stored in the option information 2015.

Examples other than those shown in Figs.38-42 are, for example, an example in which the LDAP server and the user are selected as update targets and an example in which the LDAP server, the user and the management item are selected as update targets.

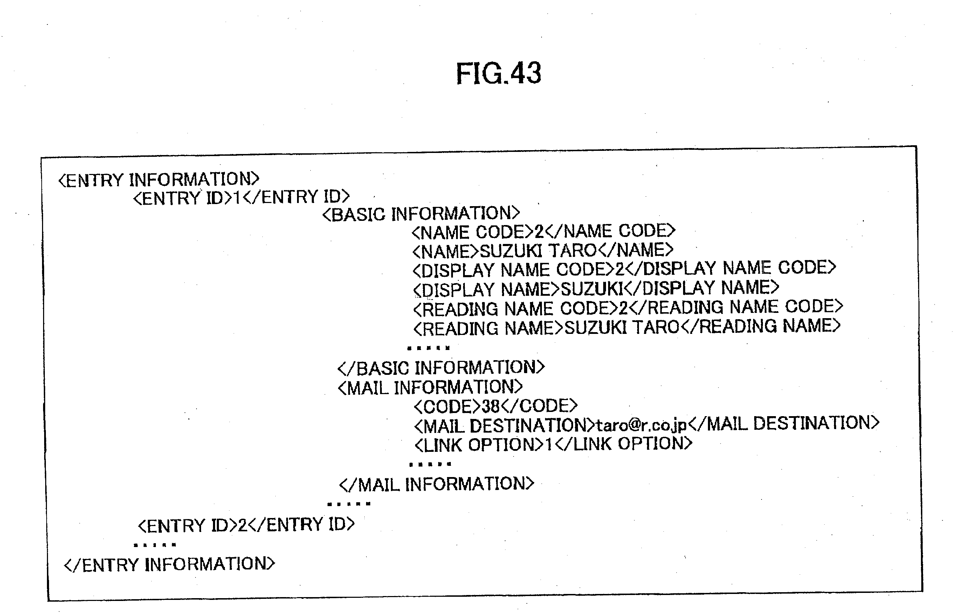

In the following, a case is described in which the automatic update setting is remotely performed. The automatic update setting can be performed by a remote setting operation from a PC (personal computer) connected to the compound machine 101. In this case, the automatic update setting request may be described by using XML(eXtensible Markup Language) and may be transmitted by using SOAP (Simple Object Access Protocol) as shown in Fig.43. The XML data shown in Fig.43 includes users (entries) that are update targets. Accordingly, the update targets can be selected in the same way described with reference to Figs. 38-42.

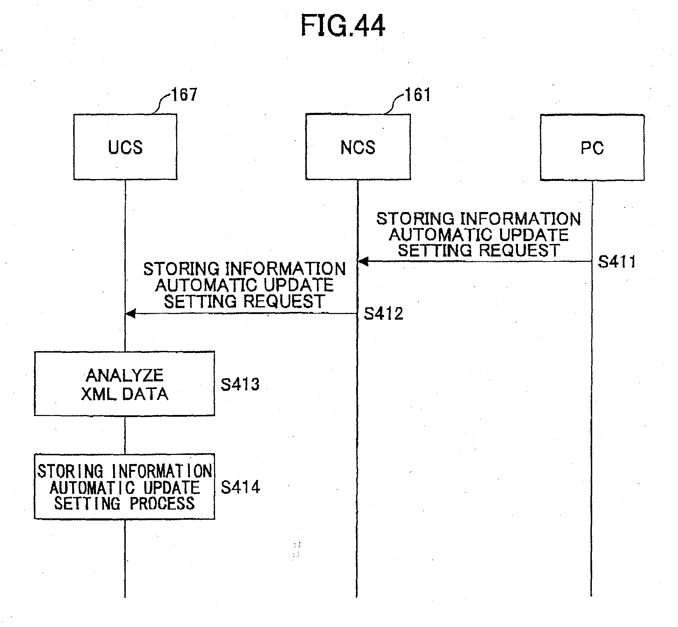

Fig.44 shows a flowchart showing remote automatic update setting for storing information. When a remote setting operation is input in an PC connected to the compound machine 101, the PC sends the automatic update setting request to the NCS 161 in step 411. In response to the request, the NCS 161 sends the automatic update setting request to the UCS 167 in step 412. Then, the UCS 167 analyzes the XML data in step 413 and performs the automatic update setting processes of the storing information in step 414.

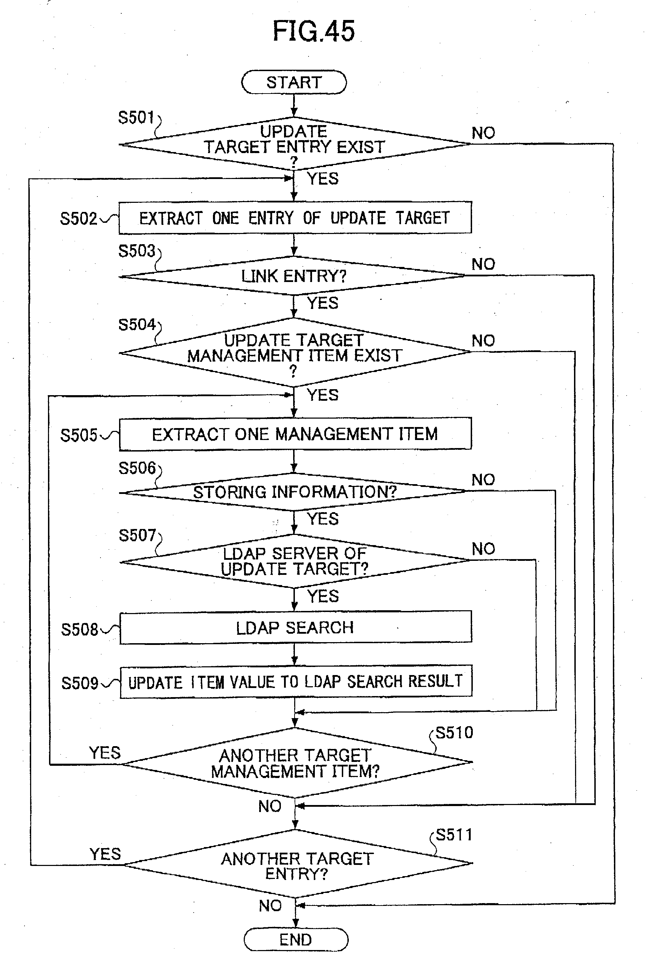

Based on the above description, details of the update process of storing information in step 304 in Fig.36 are described. Fig.45 shows a flowchart of the update process of storing information in step 304 in Fig.36.

If an entry of an update target exists in entries stored in the HDD 233 in step 501, one entry of an update target is extracted in step 402. When there does not exist the target entry, the update process ends.

If the option information 2003 of the extracted entry is the link entry in step 503 and if an management item 2001 of an update target exists in the extracted entry in step 504, one management item of the update target is extracted in step 505. If the option information 2003 of the extracted entry is not the link entry, or the management item 2001 of the update target does not exist in the extracted entry, the step goes to the step 511.

If the option information 2015 of the extracted management item 2001 is the storing information in step 506 and if the sever information 2014 of the extracted management item 2001 is a LDAP server of the update target in step 507, LDAP search for the attribute 2013 of the extracted management item 2001 is performed in step 508. That is, the UCS 167 sends a search operation request for the attribute 2013 to the LDAP server 701 (step 304-1 in Fig.36), and the LDAP server 701 sends the search result to the UCS 167 (step 302-2 in Fig.36). If the option information 2015 of the extracted management item 2001 is not the storing information, or the server information 2014 of the extracted management item 2001 is not the LDAP server of the update target, the step goes to step 510.

Next, the item value 2011 of the extracted management item 2001 is updated to the LDAP search result in step 509, and the update version 2002 of the extracted entry and the update history 2012 of the item value of the extracted management item 2001 are updated.

If another management item exists as an update target in the extracted entry in step 510, the step returns to step 505. When further management item 2001 does not exist, the step goes to step 511.

Then, if another entry exists in the entries stored in the HDD 233 in step 511, the step returns to step 502. If further entry does not exist, the update process ends.

As mentioned above, the UCS 167 can update storing information on the basis of the link under various settings shown in Figs.37-42. In the update process, the UCS 167 may determine whether the storing information is different from the linked user information (LDAP attribute value) by using LDAP search and LDAP comparison and the like, so that the UCS 167 may update the storing information which is determined to be different from the linked user information. This case is described in detail in the following.

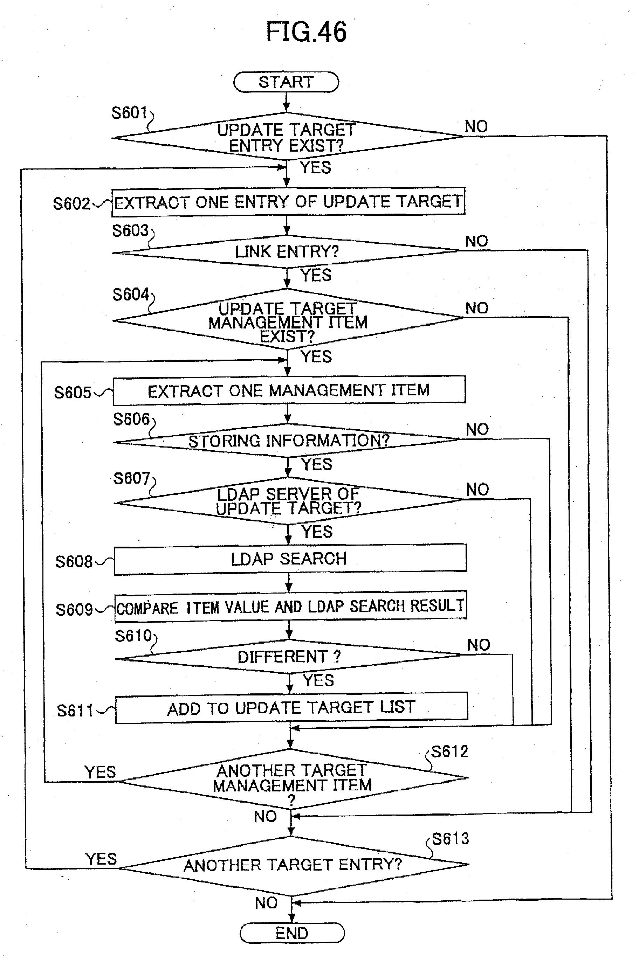

Fig.46 is a flowchart showing the case where the determination is performed by using the LDAP search.

If an entry of an update target exists in entries stored in the HDD 233 in step 601, one entry of an update target is extracted in step 602. When there does not exist the target entry, the update process ends.

If the option information 2003 of the extracted entry is the link entry in step 603 and if an management item 2001 of the update target exists in the extracted entry in step 604, one management item of the update target is extracted in step 605. If the option information 2003 of the extracted entry is not the link entry, or the management item 2001 of the update target does not exist in the extracted entry, the step goes to the step 613.

If the option information 2015 of the extracted management item 2001 is the storing information in step 606 and if the sever information 2014 of the extracted management item 2001 is a LDAP server of the update target in step 607, LDAP search for the attribute 2013 of the extracted management item 2001 is performed in step 608. That is, the UCS 167 sends a search operation request for the attribute 2013 to the LDAP server 701, and the LDAP server 701 sends the search result to the UCS 167. If the option information 2015 of the extracted management item 2001 is not the storing information, or the server information 2014 of the extracted management item 2001 is not the LDAP server of the update target, the step goes to step 612.

Next, the item value 2011 of the extracted management item 2001 is compared with the LDAP search result in step 609. If it is determined that they are not the same in step 610, the item value 2011 of the extracted management item 2001 is added to the update target list in step 611. If it is determined that they are the same, the step goes to step 612.

If another management item exists as an update target in the extracted entry in step 612, the step returns to step 605. When further management item 2001 does not exist, the step goes to step 613.

If another entry exists in the entries stored in the HDD 233 in step 613, the step returns to step 602. If further entry does not exist, the update process ends.

The processes from step 601 to step 613 in Fig.46 are performed before the processes from step 501 to step 511 in Fig.45 as the update processes of the storing information of step 304 in Fig.36. In this case, it is not necessary to perform all of the processes of steps 501-511, but it is necessary to perform only step 509 for storing information (item value 2011 of the management item 2001) added to the above-mentioned update target list. The LDAP search result obtained in step 608 can be used as the LDAP search result used in step 509.

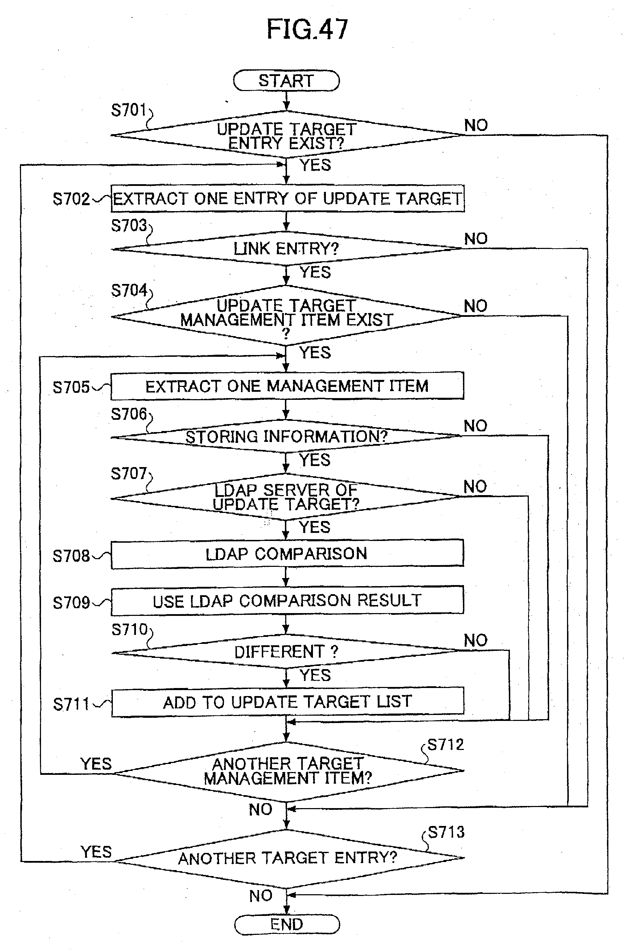

Fig.47 is a flowchart showing a case where determination is performed by using LDAP comparison.

Processes from step 701 to step 713 correspond to processes from step 601 to step 613 in Fig.46. Different from the processes in Fig.46, LDAP comparison is performed in step 708 and the LDAP comparison result is used in step 709. In the LDAP comparison, the UCS 167 sends a comparison operation request to the LDAP server 701, and the LDAP server 701 returns a comparison result to the UCS 167.

The processes from step 701 to step 713 in Fig.47 are performed before the processes from step 501 to step 511 in Fig.45 as the update processes of the storing information in step 304 in Fig.36. In this case, it is not necessary to perform all of the processes of steps 501-511, but it is necessary to perform only step 508 and step 509 for storing information (item value 2011 of the management item 2001) added to the above-mentioned update target list.

So far, as a concrete example of "automatic update of storing information", a case has been described in which the timing at which automatic update is started is determined as a predetermined time by using a timer. In the following, a modification of this method is described in which the timing is determined by a predetermined operation, more particularly, the automatic update is started when a predetermined operation is input.

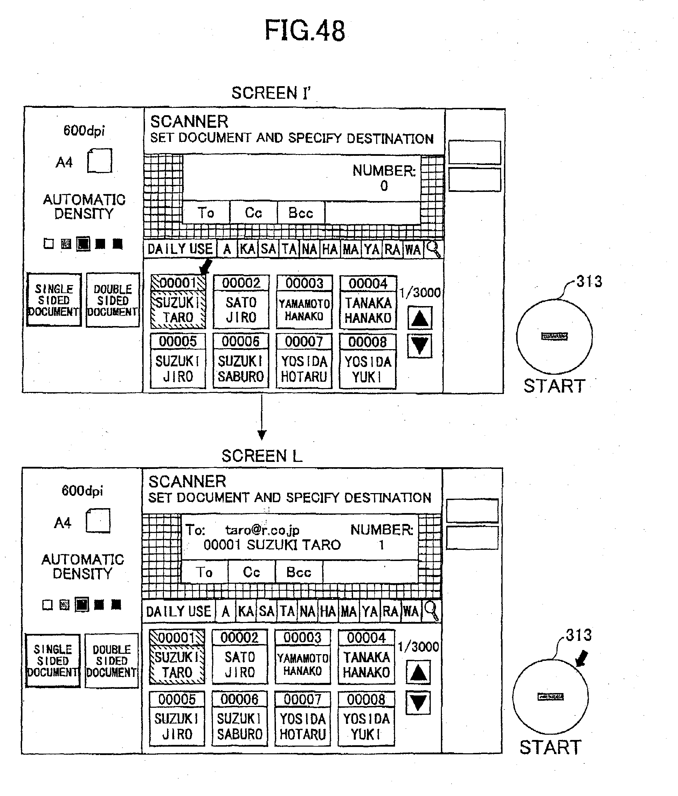

Fig.48 shows screen change for automatic update of storing information. A screen K is the scanner screen 721 shown in Fig.8, wherein the update start button and the update target button are not provided in this example. When the scanner screen 721 is shown on the touch panel 311, the compound machine 101 functions as a scanner. That is, the compound machine 101 can perform processes to send an image to another apparatus via a network by using user information stored in the HDD 233 and managed by the UCS 167. When a user "Taro Suzuki" is touched on the screen K, the screen is changed to the screen L, so that a mail destination of the user "Taro Suzuki" is selected and set as user information used in the above-mentioned process. When a start button 313 is pushed on the screen L, an image is obtained from a document that is set on the compound machine 101 and a process for sending the image by using the mail destination is started. The above-mentioned process also applies to a case where the compound machine 101 functions as a facsimile.

When the start button 313 is pushed, the UCS 167 automatically starts update of the storing information. As shown in Figs.46 and 47, the UCS 167 determines whether the storing information is different from the linked user information by using LDAP search or LDAP comparison, so that the compound machine 101 updates storing information which is determined to be different from the linked user information. The automatic update can be started when the user "Taro Suzuki", for example, is touched instead when the start button 313 is pushed.

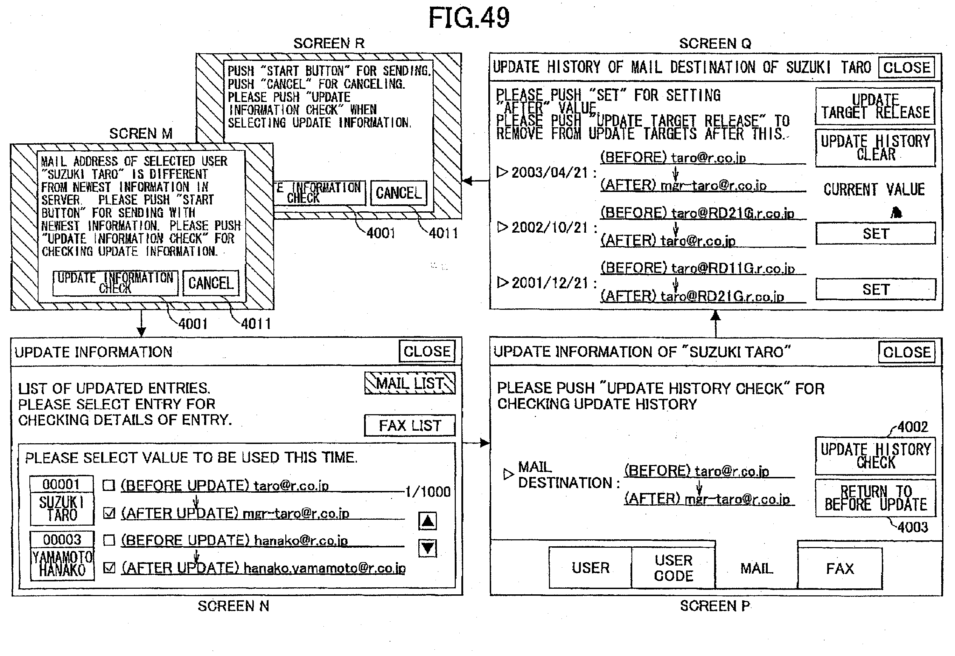

Screen changes in Fig.49 follows the screen changes of Fig.48. When the mail destination is updated since it is determined that the mail address is different from the linked user information, a screen M is displayed by the end of execution of the process for sending the image. In this example, since the update of the storing information is started when the start button 313 is pushed (when the process for sending the image is started), the process for sending the image is temporarily deferred, so that the screen M is displayed. The screen M shows that the selected mail destination is different from the linked user information.

When an update information check button 4001 is touched on the screen M, the screen is changed to the screen N. The screen N shows a list of users (entries) for which storing information is updated. When the user "Taro Suzuki" is touched on the screen N, the screen is changed to a screen P. On the screen P, updated information of the storing information of the user "Taro Suzuki" is displayed.

In this example, the screen P indicates that the item value of the management item "mail destination" has been updated from "taro@r.co.jp" to "mgr-taro@r.co.jp". When an update history check button 4002 for the management item "mail destination" is touched, the screen is changed to a screen Q. On the screen Q, update history of the item value of the management item "mail destination" is displayed. In the process, when a "return to before update button" 4003 for the management item "mail destination" is touched, the item value of the management item "mail destination" is changed to one that is not updated.

When a close button is touched in the screens N, P and Q, a screen R instead of the screen M is displayed. When the start button 313 is pushed on the screen M or R, the process for sending the image is restarted. In the process, an updated one of the selected mail destination is used. When a cancel button 4011 is touched on the screen M or R, the process for sending the image is stopped.

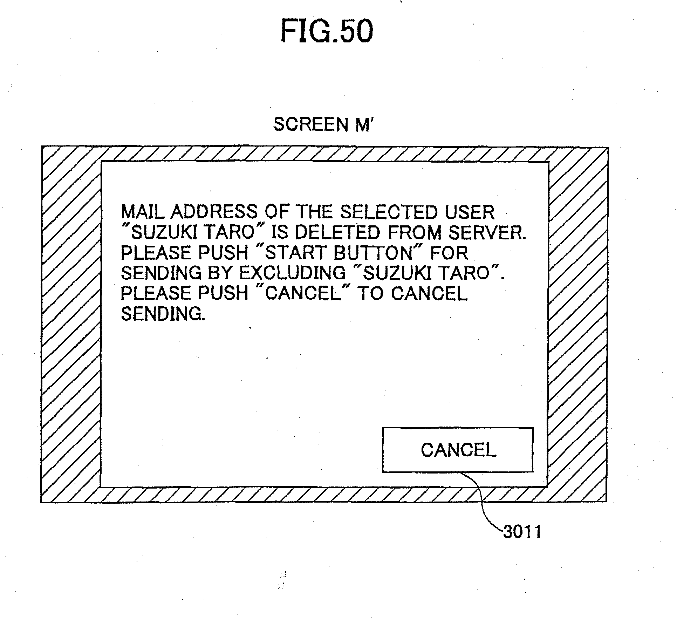

Even when the selected mail destination is determined to be different from the linked user information so that the mail destination is updated, the process may be performed by using the updated mail destination without displaying the information indicating that the mail destination is different from the linked user information as shown in screen M in Fig.49. In this case, only when the linked user information is deleted, the information indicating that the linked user information is deleted may be displayed as shown in a screen M' in Fig.50. In addition, it can be set in the screen J in Fig.35 whether to display the information indicating that the mail destination is different from the linked user information.

The above-mentioned processes also applies to a FAX destination in a case where the compound machine 101 functions as a facsimile.

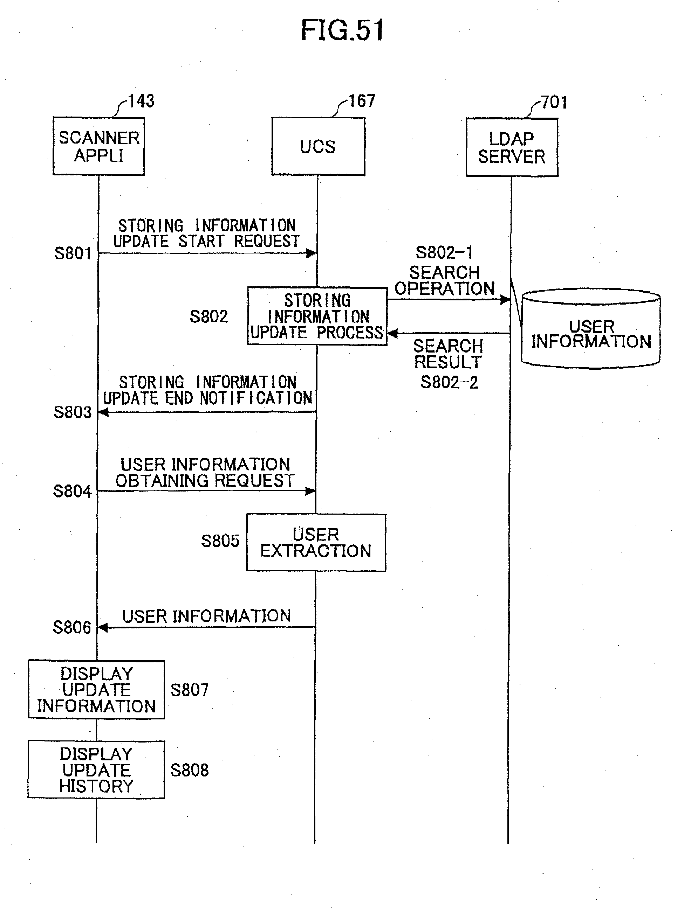

Fig.51 shows a flowchart showing the automatic update process for the storing information. When the start button 313 is pushed on the screen L in Fig.48, the scanner application 143 and the like sends an update start request for the storing information to the UCS 167 in step 801. In response to this request, the UCS 167 starts the update process for the storing information in step 802. In the update process, the UCS 167 sends a search operation request for the storing information to the LDAP server 701 in step 802-1, and the LDAP server 701 sends the search result to the UCS 167 in step 802-2. Accordingly, the UCS 167 performs the update process. Next, the UCS 167 sends an update end notification to the scanner application 143 and the like in step 803.

After that, when the update information check button 4001 is touched in the screen M or R in Fig.49, the scanner application 143 and the like sends a request for obtaining user information of a user (entry) for which storing information has been updated to the UCS 167 in step 804. In response to that, the UCS 167 extracts a user (entry) for which the storing information has been updated from users (entries) managed in the HDD 233 in step 805. Next, the UCS 167 provides user information of the user for which the storing information is updated to the scanner application 143 and the like in step 806. In response to that, the scanner application 143 and the like displays updated information of the storing information on the touch panel 311 as shown in screen N or P in Fig.49 in step 807. Further, when the update history check button 4002 is touched on the screen P in Fig.48, the scanner application 143 and the like displays the update history of the storing information on the touch panel 311 as shown in screen Q in Fig.48 in step 808.

The processes described so far can be realized by a computer program that is executed in an information processing apparatus such as a computer. The computer program can be stored in a recording medium such as a CD-ROM, a DVD-ROM, flash memory card and the like from which the computer program can be loaded in the computer.

As mentioned above, an information processing apparatus of the present embodiment includes:
an information management part for managing first user information obtained from an information management server that manages second user information,
wherein the information management part manages the first user information as an item value of a management item in the information processing apparatus by linking the first user information with the second user information that is managed by an item value of a management item in the information management server, and
the information management part updates the first user information by using a link used for linking the first user information with the second user information in response to an update start operation.

In the information processing apparatus, the information management part updates a part of pieces of the first user information linked with the second user information by using the link, wherein the part of pieces of the first user information is user information of an information management server selected as an update target by an information management server selection operation. Thus, the user can update user information relating to the information management server selected by the user.

The information processing apparatus may further includes an information management server display part for displaying information on the information management server selected as the update target while updating user information. Thus, the user can check the number of update targets while updating. Therefore, for example, the user can determines whether the process should be cancelled or not.

The information processing apparatus may further includes an update history display part for displaying update history of user information updated by the information management part. Thus, the user can check update history after the user information is updated. Therefore, for example, the user can determine whether the user information needs to be changed to a state before the update.

The information processing apparatus may further includes an update information display part for displaying update information of user information updated by the information management part. Thus, the user can check update information after the user information is updated. Therefore, for example, the user can determine whether the user information needs to be changed to a state before the update.

In addition, a computer program for causing a computer to perform information processing is provided, in which the computer program includes:
information management program code means for managing first user information obtained from an information management server that manages second user information,
wherein information management program code means manages the first user information as an item value of a management item in the computer by linking the first user information with the second user information that is managed by an item value of a management item in the information management server, and
the information management program code means updates the first user information by using a link used for linking the first user information with the second user information in response to an update start operation.

In addition, according to the present embodiment, an information processing apparatus includes:
an information management part for managing first user information obtained from an information management server that manages second user information,
wherein the information management part manages the first user information as an item value of a management item in the information processing apparatus by linking the first user information with the second user information that is managed by an item value of a management item in the information management server, and
the information management part automatically starts updating the first user information by using a link used for linking the first user information with the second user information at predetermined timing.

The information processing apparatus may further include an automatic update setting part for setting the information processing apparatus whether to start updating the first user information automatically at predetermined timing. Thus, the user can set the information processing apparatus not to start updating the user information automatically if the user wants.

In the information processing apparatus, the information management part updates a part of pieces of the first user information linked with the second user information by using the link, wherein the part of pieces of the first user information is user information of an information management server selected as an update target by an information management server selection operation. Thus, the user can select an information management server as an update target.

In the information processing apparatus, the information management part determines whether the first user information is different from the second user information linked with the first user information, and the information management part updates the first user information when the first user information is different from the second user information.

In the information processing apparatus, the information management server is a LDAP server, and the information management part determines whether the first user information is different from the second user information linked with the first user information by using LDAP search. Thus, LDAP search for determination and LDAP search for update can be performed collectively.

The information management part mat determine whether the first user information is different from the second user information linked with the first user information by using LDAP comparison. Thus, it is unnecessary for the information processing apparatus to perform comparison process for determination.

The information processing apparatus may further include a display part for displaying information indicating that a piece of the first user information is different from the second user information linked with the piece of the first user information, wherein the piece of the first user information is selected as one used for processes that use the piece of the first user information. Thus, the user can recognize that the piece of the first user information is different from the second user information. Thus, for example, the user can determine cancel the process, or the user can check update information and update history by the end of the process.

The present invention is not limited to the specifically disclosed embodiments, and variations and modifications may be made without departing from the scope of the present invention.

The present application contains subject matter related to Japanese patent application No.2003-134564, filed in the JPO on May 13, 2003, Japanese patent application No.2003-134565, filed in the JPO on May 13, 2003, Japanese patent application No.2004-131341, filed in the JPO on April 27, 2004, and Japanese patent application No.2004-131342, filed in the JPO on April 27, 2004, the entire contents of which being incorporated herein by reference.

## Claims

1. An information processing apparatus **characterized by** :
an information management part for managing first user information obtained from an information management server that manages second user information,
wherein the information management part manages the first user information as an item value of a management item in the information processing apparatus by linking the first user information with the second user information that is managed by an item value of a management item in the information management server, and
the information management part updates the first user information by using a link used for linking the first user information with the second user information in response to an update start operation.

2. An information processing apparatus **characterized by**:
an information management part for managing first user information obtained from an information management server that manages second user information and managing third user information that is not obtained from the information management server, wherein the first user information and the third user information are included in the same entry in the information processing apparatus,
wherein the information management part manages the first user information as an item value of a management item in the information processing apparatus by linking the first user information with the second user information that is managed by an item value of a management item in the information management server, and
the information management part updates the first user information by using a link used for linking the first user information with the second user information in response to an update start operation.

3. An information processing apparatus **characterized by**:
an information management part for managing first user information obtained from an information management server that manages second user information,
a link operation part for linking the first user information managed by the information management part as an item value of a management item in the information processing apparatus with the second user information that is managed by an item value of a management item in the information management server, and
an update start operation part for performing an update start operation for starting update of the first user information.

4. An information processing apparatus **characterized by**:
an information management part for managing first user information obtained from an information management server that manages second user information and managing third user information that is not obtained from the information management server, wherein the first user information and the third user information are included in the same entry in the information processing apparatus,
a link operation part for linking the first user information managed by the information management part as an item value of a management item in the information processing apparatus with the second user information that is managed as an item value of a management item in the information management server, and
an update start operation part for performing an update start operation for starting update of the first user information.

5. The information processing apparatus as claimed in claim 2, wherein the information management part manages the third user information as user information that is not discarded when new user information is obtained from the information management server as the first user information.

6. The information processing apparatus as claimed in claim 1, wherein the information management part manages a first part of pieces of the first user information by linking the first part of pieces of the first user information with the second user information, and the information management part manages a second part of pieces of the first user information without linking the second part of pieces of the first user information with the second user information.

7. The information processing apparatus as claimed in claim 1, the information processing apparatus further comprising a update start operation part for performing the update start operation.

8. The information processing apparatus as claimed in claim 1, wherein the information management part updates a part of pieces of the first user information linked with the second user information by using the link, wherein the part of pieces of the first user information is user information of an information management server selected as an update target by an information management server selection operation.

9. The information processing apparatus as claimed in claim 8, the information processing apparatus further comprising an information management server selection operation part for performing the information management server selection operation.

10. The information processing apparatus as claimed in claim 8 or 9, the information processing apparatus further comprising an information management server display part for displaying information on the information management server selected as the update target while updating user information.

11. The information processing apparatus as claimed in claim 1, wherein the information management part updates a part of pieces of the first user information linked with the second user information by using the link, wherein the part of pieces of the first user information is user information of an management item selected as an update target by a management item selection operation.

12. The information processing apparatus as claimed in claim 11, the information processing apparatus further comprising a management item selection operation part for performing the management item selection operation.

13. The information processing apparatus as claimed in claim 11 or 12, the information processing apparatus further comprising a management item display part for displaying information on the management item selected as the update target while updating user information.

14. The information processing apparatus as claimed in claim 1, wherein the information management part updates a part of pieces of the first user information linked with the second user information by using the link, wherein the part of pieces of the first user information is user information of a user selected as an update target by a user selection operation.

15. The information processing apparatus as claimed in claim 14, the information processing apparatus further comprising a user selection operation part for performing the user selection operation.

16. The information processing apparatus as claimed in claim 14 or 15, the information processing apparatus further comprising a user display part for displaying information on the user selected as the update target while updating user information.

17. The information processing apparatus as claimed in any one of the preceding claims, wherein the information management part manages an update version of user information.

18. The information processing apparatus as claimed in any one of the preceding claims, wherein the information management part manages update history of user information.

19. The information processing apparatus as claimed in any one of the preceding claims, the information processing apparatus further comprising an update history display part for displaying update history of user information updated by the information management part.

20. The information processing apparatus as claimed in any one of the preceding claims, the information processing apparatus further comprising an update information display part for displaying update information of user information updated by the information management part.

21. The information processing apparatus as claimed in any one of the preceding claims, wherein the information management server is an LDAP server.

22. The information processing apparatus as claimed in any one of claims 1 to 20, wherein the information processing apparatus is an image forming apparatus.

23. The information processing apparatus as claimed in claim 22, wherein the information processing apparatus performs image forming processes by using user information managed by the information management part.

24. The information processing apparatus as claimed in claim 22 or 23, wherein the information processing apparatus sends an image by using user information managed by the information management part.

25. An information processing method used in an information processing apparatus, the information processing method **characterized by**:
an information management step of managing first user information obtained from an information management server that manages second user information,
wherein, in the information management step, the information processing apparatus manages the first user information as an item value of a management item in the information processing apparatus by linking the first user information with the second user information that is managed by an item value of a management item in the information management server, and
the information processing apparatus updates the first user information by using a link used for linking the first user information with the second user information in response to an update start operation.

26. An information processing method used in an information processing apparatus, the information processing method **characterized by**:
an information management step of managing first user information obtained from an information management server that manages second user information and managing third user information that is not obtained from the information management server,
wherein the first user information and the third user information are included in the same entry in the information processing apparatus,
wherein the information processing apparatus manages the first user information as an item value of a management item in the information processing apparatus by linking the first user information with the second user information that is managed by an item value of a management item in the information management server, and
the information processing apparatus updates the first user information by using a link used for linking the first user information with the second user information in response to an update start operation.

27. An information processing method used in an information processing apparatus, the information processing method **characterized by**:
an information management step of managing first user information obtained from an information management server that manages second user information,
a step of providing a link operation part for linking the first user information managed by the information processing apparatus as an item value of a management item in the information processing apparatus with the second user information that is managed as an item value of a management item in the information management server, and
a step of providing an update start operation part for performing an update start operation for starting update of the first user information.

28. An information processing method used in an information processing apparatus, the information processing method **characterized by**:
an information management step of managing first user information obtained from an information management server that manages second user information and managing third user information that is not obtained from the information management server, wherein the first user information and the third user information are included in the same entry in the information processing apparatus,
a step of providing a link operation part for linking the first user information managed by the information management part as an item value of a management item in the information processing apparatus with the second user information that is managed as an item value of a management item in the information management server, and
a step of providing an update start operation part for performing an update start operation for starting update of the first user information.

29. The information processing method as claimed in claim 26, wherein the information processing apparatus manages the third user information as user information that is not discarded when new user information is obtained from the information management server as the first user information.

30. The information processing method as claimed in claim 25, wherein the information processing apparatus manages a first part of pieces of the first user information by linking the first part of pieces of the first user information with the second user information, and the information processing apparatus manages a second part of pieces of the first user information without linking the second part of pieces of the first user information with the second user information.

31. The information processing method as claimed in any one of claims 25 to 30, wherein the information processing apparatus performs image forming processes by using user information managed by the information processing apparatus.

32. The information processing method as claimed in any one of claims 25 to 31, wherein the information processing apparatus sends an image by using user information managed by the information processing apparatus.

33. An information processing apparatus **characterized by**:
an information management part for managing first user information obtained from an information management server that manages second user information,
wherein the information management part manages the first user information as an item value of a management item in the information processing apparatus by linking the first user information with the second user information that is managed by an item value of a management item in the information management server, and
the information management part automatically starts updating the first user information by using a link used for linking the first user information with the second user information at predetermined timing.

34. An information processing apparatus **characterized by**:
an information management part for managing first user information obtained from an information management server that manages second user information and managing third user information that is not obtained from the information management server, wherein the first user information and the third user information are included in the same entry in the information processing apparatus,
wherein the information management part manages the first user information as an item value of a management item in the information processing apparatus by linking the first user information with the second user information that is managed by an item value of a management item in the information management server, and
the information management part automatically starts updating the first user information by using a link used for linking the first user information with the second user information at predetermined timing,

35. An information processing apparatus **characterized by**:
an information management part for managing first user information obtained from an information management server that manages second user information,
a link operation part for linking the first user information managed by the information management part as an item value of a management item in the information processing apparatus with the second user information that is managed by an item value of a management item in the information management server, and
an automatic update setting part for setting the information processing apparatus whether to start updating the first user information automatically at predetermined timing.

36. An information processing apparatus **characterized by**:
an information management part for managing first user information obtained from an information management server.that manages second user information and managing third user information that is not obtained from the information management server, wherein the first user information and the third user information are included in the same entry in the information processing apparatus,
a link operation part for linking the first user information managed by the information management part as an item value of a management item in the information processing apparatus with the second user information that is managed as an item value of a management item in the information management server, and
an automatic update setting part for setting the information processing apparatus whether to start updating the first user information automatically at predetermined timing.

37. The information processing apparatus as claimed in claim 34 wherein the information management part manages the third user information as user information that is not discarded when new user information is obtained from the information management server as the first user information.

38. The information processing apparatus as claimed in claim 33, wherein the information management part manages a first part of pieces of the first user information by linking the first part of pieces of the first user information with the second user information, and the information management part manages a second part of pieces of the first user information without linking the second part of pieces of the first user information with the second user information.

39. The information processing apparatus as claimed in any one of claims 33 to 38, the information processing apparatus further comprising an automatic update setting part for setting the information processing apparatus whether to start updating the first user information automatically at predetermined timing.

40. The information processing apparatus as claimed in any one of claims 33 to 39, the information processing apparatus further comprising a timing setting part for setting the timing.

41. The information processing apparatus as claimed in any one of claims 33 to 40, wherein the timing is a predetermined time determined by a timer.

42. The information processing apparatus as claimed in any one of claims 33 to 40, wherein the timing corresponds to a predetermined operation input in the information processing apparatus.

43. The information processing apparatus as claimed in claim 42, wherein the operation is an operation for starting processes that use user information managed by the information processing apparatus.

44. The information processing apparatus as claimed in claim 42, wherein the operation is an operation for selecting user information that is used in processes that use the selected user information.

45. The information processing apparatus as claimed in claim 33, wherein the information management part updates a part of pieces of the first user information linked with the second user information by using the link, wherein the part of pieces of the first user information is user information of an information management server selected as an update target by an information management server selection operation.

46. The information processing apparatus as claimed in claim 45, the information processing apparatus further comprising an information management server selection operation part for performing the information management server selection operation.

47. The information processing apparatus as claimed in claim 33, wherein the information management part updates a part of pieces of the first user information linked with the second user information by using the link, wherein the part of pieces of the first user information is user information of an management item selected as an update target by a management item selection operation.

48. The information processing apparatus as claimed in claim 47, the information processing apparatus further comprising a management item selection operation part for performing the management item selection operation.

49. The information processing apparatus as claimed in claim 33, wherein the information management part updates a part of pieces of the first user information linked with the second user information by using the link, wherein the part of pieces of the first user information is user information of a user selected as an update target by a user selection operation.

50. The information processing apparatus as claimed in claim 49, the information processing apparatus further comprising a user selection operation part for performing the user selection operation.

51. The information processing apparatus as claimed in claim 33, wherein the information management part determines whether the first user information is different from the second user information linked with the first user information, and the information management part updates the first user information when the first user information is different from the second user information.

52. The information processing apparatus as claimed in claim 51, wherein the information management server is a LDAP server, and the information management part determines whether the first user information is different from the second user information linked with the first user information by using LDAP search.

53. The information processing apparatus as claimed in claim 51, wherein the information management server is a LDAP server, and the information management part determines whether the first user information is different from the second user information linked with the first user information by using LDAP comparison.

54. The information processing apparatus as claimed in claim 51, the information processing apparatus further comprising a display part for displaying information indicating that a piece of the first user information is different from the second user information linked with the piece of the first user information, wherein the piece of the first user information is selected as one used for processes that use the piece of the first user information.

55. The information-processing apparatus as claimed in any one of claim 33 to 54, wherein the information management part manages an update version of user information.

56. The information processing apparatus as claimed in any one of claims 33 to 55, wherein the information management part manages update history of user information.

57. The information processing apparatus as claimed in any one of claims 33 to 56, the information processing apparatus further comprising an update history display part for displaying update history of user information updated by the information management part.

58. The information processing apparatus as claimed in any one of claims 33 to 57, the information processing apparatus further comprising an update information display part for displaying update information of user information updated by the information management part.

59. The information processing apparatus as claimed in any one of claims 33 to 58, wherein the information management server is a LDAP server.

60. The information processing apparatus as claimed in any one of claims 33 to 58, wherein the information processing apparatus is an image forming apparatus.

61. The information processing apparatus as claimed in claim 60, wherein the information processing apparatus performs image forming processes by using user information managed by the information management part.

62. The information processing apparatus as claimed in claims 60 or 61, wherein the information processing apparatus sends an image by using user information managed by the information management part.

63. An information processing method used in an information processing apparatus, the information processing method **characterized by**:
an information management step of managing first user information obtained from an information management server that manages second user information,
wherein, in the information management step, the information processing apparatus manages the first user information as an item value of a management item in the information processing apparatus by linking the first user information with the second user information that is managed as an item value of a management item in the information management server, and
the information processing apparatus automatically starts updating the first user information by using a link used for linking the first user information with the second user at a predetermined timing.

64. An information processing method used in an information processing apparatus, the information processing method **characterized by**:
an information management step of managing first user information obtained from an information management server that manages second user information and managing third user information that is not obtained from the information management server,
wherein the first user information and the third user information are included in the same entry in the information processing apparatus,
wherein the information processing apparatus manages the first user information as an item value of a management item in the information processing apparatus by linking the first user information with the second user information that is managed by an item value of a management item in the information management server, and
the information processing apparatus automatically starts updating the first user information by using a link used for linking the first user information with the second user at a predetermined timing.

65. An information processing method used in an information processing apparatus, the information processing method **characterized by**:
an information management step of managing first user information obtained from an information management server that manages second user information,
a step of providing a link operation part for linking the first user information managed by the information processing apparatus as an item value of a management item in the information processing apparatus with the second user information that is managed as an item value of a management item in the information management server, and
a step of providing an automatic update setting part for setting the information processing apparatus whether to start updating the first user information automatically at a predetermined timing

66. An information processing method used in an information processing apparatus, the information processing method **characterized by**:
an information management step of managing first user information obtained from an information management server that manages second user information and managing third user information that is not obtained from the information management server,
wherein the first user information and the third user information are included in the same entry in the information processing apparatus,
a step of providing a link operation part for linking the first user information managed by the information management part as an item value of a management item in the information processing apparatus with the second user information that is managed as an item value of a management item in the information management server, and
a step of providing an automatic update setting part for setting the information processing apparatus whether to start updating the first user information automatically at a predetermined timing.

67. The information processing method as claimed in claim 64, wherein the new information processing apparatus manages the third user information as user information that is not discarded when new user information is obtained from the information management server as the first user information.

68. The information processing method as claimed in claim 63, wherein the information processing apparatus manages a first part of pieces of the first user information by linking the first part of pieces of the first user information with the second user information, and the information processing apparatus manages a second part of pieces of the first user information without linking the second part of pieces of the first user information with the second user information.

69. The information processing method as claimed in any one of claims 63 to 66, wherein the information processing apparatus performs image forming processes by using user information managed by the information processing apparatus.

70. The information processing method as claimed in any one of claims 63 to 69, wherein the information processing apparatus sends an image by using user information managed by the information processing apparatus.

71. A computer program comprising program code means that, when executed by an information processing apparatus, instructs the information processing apparatus to perform the method of any one of claims 25 to 32 or 63 to 70.

72. A computer-readable storage medium having stored thereon a computer program according to claim 71.
